(19) **Europäisches Patentamt European Patent Office Office européen des brevets**

(11) **EP 4 491 001 B1**

(12) **FASCICULE DE BREVET EUROPÉEN**

(45) Date de publication et mention de la délivrance du brevet:
**15.10.2025 Bulletin 2025/42**

(21) Numéro de dépôt: **24163924.4**

(22) Date de dépôt: **15.03.2024**

(51) Classification Internationale des Brevets (IPC):
***A01C 21/00*** *(2006.01)*

(52) Classification Coopérative des Brevets (CPC):
**A01C 21/007**

(54) **MÉTHODE DE FERTILISATION RAISONNÉE EN AGRICULTURE DURABLE**

VERFAHREN ZUR DÜNGUNG IN DER NACHHALTIGEN LANDWIRTSCHAFT

REASONED FERTILIZATION IN SUSTAINABLE AGRICULTURE

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **12.07.2023 FR 2307458**

(43) Date de publication de la demande:
**15.01.2025 Bulletin 2025/03**

(73) Titulaire: **Polyor SAS**
**54000 Nancy (FR)**

(72) Inventeur: **Claude, Pierre-Philippe**
**54000 Nancy (FR)**

(56) Documents cités:
EP-A1- 3 821 688     EP-A1- 4 252 512
EP-A1- 4 252 516     WO-A1-2013/168483

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**État de la technique et contexte**

En agriculture, la durabilité ne doit pas exclure progrès technique, voire intensification des pratiques culturales. Au contraire, la durabilité au sens classique (Brundtland et al. 1987) implique des niveaux de production suffisamment élevés pour assurer la sécurité, voire la souveraineté, alimentaire de pays et régions. Cela appel la notion *d'agriculture écologiquement intensive* (Ghali et al. 2014). Selon Griffon et al. 2007, le principe de base de l'AEI est l'intensification écologique qui est l'obtention d'un rendement *plus élevé* par unité de biosphère pour un ensemble d'objectifs de viabilité recherché. L'AEI peut être vue comme un système de production caractérisé par un ensemble de techniques et de technologies ayant pour objectif d'intensifier les fonctions d'un écosystème de production, permettant de maximiser la production agricole et les aménités environnementales, de réduire les extemalités négatives et d'améliorer la gestion des ressources naturelles. Or, rien n'indique qu'à un moment donné, le progrès technique n'est pas en mesure de dépasser ces maximas. Il faut pourtant s'assurer que cette intensification demeure durable. Comment faire ?

Le contexte de l'agriculture durable est marqué par la volonté de comptabiliser les unités de carbone atmosphérique séquestrées dans les sols, et de rémunérer ainsi les agriculteurs ayant adopté des pratiques culturales supposées favoriser ce stockage tellurique de ce carbone. On parle parfois de *carbon-farming* (angl. ; Hoglund et al. 2020) ou encore de agriculture bas carbone (Soenen et al. 2021). Pour des raisons méthodologiques et institutionnelles, la comptabilité carbone est pour le moment surtout applicable aux niveaux régional et national, et non en conseil agricole au niveau de la parcelle. Les coûts d'échantillonnage et de suivi de la parcelle (Bettigole et al. 2013), ainsi que les problèmes de (im)précision font de l'émission et du courtage de crédits carbone un jeu de devinettes ; voir la critique socio-économique de Berta et Roux 2024.

Pire, le coût des nutriments fertilisants - l'azote en particulier, du fait que la matière organique du sol est très riche en azote - n'est pas correctement intégré dans l'équation d'agriculture bas-carbone (Richardson et al. 2014, Van Groenigen et al. 2017). Il ne semble pas, non plus, y avoir beaucoup de consensus quant aux types de pratiques culturales intrinsèquement les plus durables. Enfin, les modes de réalisation de l'agriculture bas-carbone proposés actuellement - notamment en France via les labels bas carbone, sont complexes et peu ergonomiques.

En agriculture, tout cela rend difficile, voire impossible, le courtage de crédits de carbone provenant de l'augmentation des stocks de carbone des sols.

**Le problème technique**

Le progrès technique issue de l'intelligence collective pourrait rehausser la courbe de réponse à l'azote, CRP (EP4252516) en la translatant à la suite à des augmentations de rendement unitaires azotés, RUN. Cela dit, à la lumière de la définition opérationnelle selon AgroNum™ (www.polyor.fr) ces augmentations de RUN au-delà de ceux préconisées par la courbe de réponse à l'azote, CRP (EP22210746.8) sont par définition considérées comme a priori non-durables. En effet, toute augmentation de RUN au-delà de CRP ce ferait nécessairement aux dépens de la teneur en azote des résidus de culture et/ou les retours en azote au sol par les résidus de culture, et donc aux dépends du taux et degré d'humification de ces résidus en matière organique du sol.

Pourtant, EP4101280 et EP4252516 n'excluent par un éventuel dépassement de la courbe de réponse des RDN du fait d'une amélioration purement agronomique des RUN. Notons que le titre d'EP4101280 comprend une mention révélatrice ; *« improving the sustainability of current cropping pratices »*. Pour assurer la durabilité de telles augmentations il faudrait cependant les conditionner pour s'assurer qu'elles laissent suffisamment d'azote dans les résidus de culture pour leur humification. Cette humification conservatrice des résidus de culture est assurée par EP4252516 du fait d'une proportionnalité des taux d'augmentation des *rendements grain azotés* RDN, et des *retours d'azote au sol des résidus de culture* RCN selon les taux de fertilisation azotée TUN.

Le problème technique comporte aussi une dimension socio-économique ; Comment rémunérer l'agriculteur/-trice pour un service à l'environnement, et plus spécifiquement la conservation de la matière organique du sol, sans avoir à recourir au susdit courtage de crédits-carbone telluriques notoirement imprécis et peu rentable du fait de coûts d'échantillonnage importants?

**Sigles, définitions et correspondances** - Nb. [ ... 1 → terminologie FR2307458

**Durabilité** (agriculture durable) : systèmes de culture comprenant des pratiques culturales et itinéraires techniques assurant la conservation des sols, et notamment leurs matière organique, tout en satisfaisant collectivement aux exigences socio-économiques des agriculteurs soucieux de produire suffisamment pour répondre aux besoins agro-alimentaires exprimés.

**Progrès technique durable** [Équation 15]: l'augmentation de RDN fonction de TUN attribuable à un traitement TRT au-delà de pTEC (infra) et par rapport à CRP (infra) assurant ainsi qu'une partie de cet azote supplémentaire est laissée aux résidus de culture pour leur humification.

**Opérateur** : celui ou celle, voire toute interface ou module interopérable avec l'utilisateur (infra) mettant en œuvre la présente invention, voire EP3821688, EP4101280, EP4252516 et/ou la présente invention impliqués dans sa réalisation, transmettant à l'utilisateur des préconisations d'objectifs de rendements azotés RDN durables, et leurs taux de fertilisation azotée TUN correspondants.

**Utilisateur** : celui/celle produisant des grandes cultures *non-Fabaceae* à graines telles que les céréales, le maïs-grain, le colza et le tournesol, et plus généralement toute personne ou interface interopérable avec l'opérateur (supra), et capable d'apprécier le degré de faisabilité des préconisations initialement transmises par l'opérateur.

**TRT** : traitement à l'essai sur la parcelle modifiant la pratique culturale

**trt** : pratique culturale non-modifiée à titre de *traitement* témoin de TRT

**AZB™** : fertilisation azotobactiérienne (Claude et Fillion 2004) à titre de TRT

**TUN :** taux de fertilisation azotée (kg-N fertilisant/hectare/année).

**RDT** : rendement en grain d'une grande culture non-Fabaceae (kg-grain/ha), généralement exprimé en matière sèche (MS), ou encore 14% d'humidité.

**RDN** : rendement azoté des grains (kg-N_grain/ha) égale à RDT/100 x %N_grain à 100% MS servant ici au calcul de run & RUN [Équation 1].

**RCN** : retour d'azote au sol par les résidus de culture au sol post-récolte (kg-N_rcs/ha) et servant de base au calcul des *crédits azote remboursables* [Équation 14].

**RUN : :** rendement unitaire azoté run = *RDN/TUN,* ajusté et exprimés en kg-Ng/kg-N_fertilisant (Nf), lorsque $RUN = run\char`^{}21d\_RUN,$ sachant que $D_{RUN} = [1400 \cdot TUN^{-1,5}]$, et TUN le taux de fertilisation azotée (kg-N_fertilisant/ha)

**RPR** : *reliquats* (sic) post-récolte d'azote minérale (kg-N_minéral/ha). Ces *reliquats* proviendrait d'azote fertilisant non assimilé par la culture. Or, la provenance de cet azote n'est généralement *pas* attestée en conseil agricole.

**a_AgroNum** : besoin unitaire de la pratique culturale pour l'estimation de la dose d'engrais-N correspondante,

$$TUN = [\, a\_AgroNum \cdot RDN \,]. \text{[Équation 03]}$$

**rRSQ** : référence agro-environnementale durable par rapport à RSQ observée selon EP4101280 pour établir la durabilité d'une pratique culturale selon l'équation 2

**eTRT** (ou eTRT_RUN) [eAZB_RUN] : efficacité en termes de rendement unitaire RUN d'un traitement TRT à l'essai sur la parcelle par rapport à un témoin non-traité, trt avantageusement déterminée selon EP3821688 [Équation 4, et Tableau 5, ligne 29].

**CRP** (ou CRP_N) : courbe de réponse à l'azote fertilisant TUN (kg-N_fertilisant/ha) - EP4252516, indiquant les objectifs RDN et leurs TUN durables correspondants identifiés selon EP4101280. Ces courbes de réponse CRP sont des fonctions en puissance $RDN = a1 \; x \; TUN^{b1}$, a1 et b1 étant des coefficients empiriques propres à chaque parcelle. EP4252516 prévoit, évidemment la fonction inverse TUN = f(RDN) avec ses propres coefficients empiriques [Équation 5 à 7, et Tableau 5, lignes 28 & 29].

**pTEC** [eAZG_RDN] : la portion d'eTRT au-delà du témoin non-traité azb, mais aussi de la courbe de réponse des RDN durables selon TUN [Équations 7 & 8 ].

**pTEC_TRT** : progrès technique en terme de rendement azoté RDN attribuable à TRT modifiant la pratique culturale par rapport à la courbe CRP [Équation 8].

**pTEC_trt** : *progrès* (sic) technique en terme de rendement azoté RDN de la pratique culturale en place à titre de témoin trt par rapport à la courbe CRP [Équation 7].

**eTEC_RDN** : l'efficacité du progrès technique pTEC_TRT par rapport à eTRT déterminant la part de l'N supplémentaire laissé aux résidus de culture RCN [Équation 10].

**eTEC_RCN** : l'efficacité du progrès technique pTEC_TRT à laisser une partie de l'N supplémentaire attribuable à eTRT aux résidus de culture post-récolte [Équation 10].

**eTEC_RPR** : variable muette de facto égale à 0 puisque de tels reliquats post-récolte d'N minéral attribuable à eTRT sont négligeables, ou nuls [Tableau 5, ligne 42].

**UN_RDN_TRT** : unités d'azote UN (kg-N_grain/ha) supplémentaires attribuable à l'efficacité relative eTRT_RUN du traitement à l'essai sur la parcelle mobilisées dans par les grains au moment de la récolte [Équations 9 & 12 ; Tableau 5, ligne 44].

**UN_RCN_TRT : :** unités d'azote UN (kg-N_grain/ha) supplémentaires attribuable à l'efficacité relative eTRT_RUN du traitement à l'essai sur la parcelle laissées aux résidus de culture au moment de la récolte [Équations 10 & 12 ; Tableau 5, ligne 45].

**UN_RPR_TRT : :** unités d'azote UN (kg-N_grain/ha) supplémentaires attribuable à l'efficacité relative eTRT_RUN du traitement à l'essai sur la parcelle abandonnées dans le sols post-récolte ; alias *reliquats* (sic) d'azote minéral [Tableau 5, ligne 46]

**UN_TOT_TRT** : somme des UN_RDT, _RCN & RPR_TRT [Équation 12].

**pTEC_1** [eAZB_RCN_pTEC_1] : la proportion du supplément d'azote provenant d'eTRT laissé aux résidus de culture retournés au sol RCN strictement au-delà de la CRP comme progrès technique > 1 [Équation 13]. pTEC_1 [Tableau 5, ligne 51] appliqué UN_RCN_TRT permet de calculer les crédits d'azote remboursable carnac.

**carnac** [cUN_RCN_TRT] : crédits d'azote remboursables constitués d'unités d'azote retournés au sol par les résidus de culture contribuant réellement au progrès technique durable et à la conservation de la matière organique du sol. Ces carnac sont réputés *remboursables* par ce que cet azote aurait pu autrement être récolté à profit par l'agriculteur plutôt que laissé sciemment aux résidus de culture afin d'en assurer l'humification à titre service à l'environnement [Équation 14, et Tableau 5, ligne 55].

## La solution technique

La solution technique proposée consiste en une méthode de fertilisation raisonnée en agriculture durable pour la conservation de la matière organique du sol par évaluation qualitative et quantitative du progrès technique attribuable à une modification de la pratique culturale, comportant la récolte de l'ensemble de la parcelle agricole en grandes cultures *non-Fabaceae.*

Cette solution technique comporte aussi les déterminations, sachant que l'efficacité du traitement est déterminé par rapport à un témoin non-traité, azb, en termes de rendement unitaire de l'azote fertilisant, RUN (kg-Ng/kg-Nf), ajusté par iSQ & d_RUN ; *eTRT_RUN = [(RUN_TRT)/(RUN_trt)]_RSQ.*

Cela, y compris par rapport à la courbe de réponse à l'azote fertilisant, CRP , de rendements et doses prévisionnelles d'engrais azotés, TUN (kg-Nf/ha) correspondantes ; *pTEC_RDN = [(RDN_TRT)/(RDN_trt)]_(CRP_N)*, sachant que pTEC_TRT & pTEC_trt proviennent de l'ajustement de CRP selon TUN_TRT & TUN_trt fonction en puissance d'a1 & b1 décrivant ces courbes de réponses ;

$$pTEC_{TRT} = [RDN_{TRT}]_{CRP_N} \mid > 1 \, ; CRP_{N_{TRT}} = a1 \; x \; TUN_{TRT}^{b1},$$

ainsi que

$$pTEC_{trt} = [RDN_{trt}]_{CRP_N} \mid \leq 1 \, ; CRP_{N_{trt}} = a1 \; x \; TUN_{trt}^{b1}.$$

Tout cela en posant eTRT_RDN > 1 puisqu'il ne sert à rien d'évaluer la durabilité de traitement TRT inefficaces lorsque eTRT_RUN ≤ 1, évidemment ; *pTEC = [(pTEC_TRT)/(pTEC_trt)]* > 1. Cela permet de déterminer les unités d'azote additionnelles mobilisées par le grain attribuable à cette efficacité de TRT, UN_RDN_TRT (kg-Ng/ha) ; $UN_{RDN_{TRT}} = RDN_{TRT} - RDN_{trt}$.

Par la suite, on calcule l'augmentation progressive des retours au sol d'azote, UN_RCN_TRT (kg-Nr/ha) attribuables au traitement TRT, par exemple et avantageusement, la fertilisation azotobactérienne, AZB™ tel que proposée dans Claude et Fillion 2004 ; $UN_{RCN_{AZB}}$ = [1 - $eTEC_{RDN}$] x $UN_{RD\,AZB}$, lorsque par définition *eTEC_RDN = [(pTEC_TRT)/(eTRT_RUN)].*

En posant une seconde condition de durabilité du progrès technique, pTEC, à savoir que le témoin trt donne un rendement azoté, RDN, en dessous ou sur CRP ; $pTEC_{trt} \leq 1$ afin de tenir compte des unités d'azote additionnelles mobilisés vers les résidus de culture, RCS, attribuable eTRT.

Cela permet d'obtenir le nombre total d'unité d'azote, UN_TOT_TRT ; $UN_{TOTAL_{TRT}} = UN_{RDN_{TRT}} + UN_{RCN_{TRT}}$ et connaître le nombre d'unités d'azote supplémentaires attribuable au traitement TRT retournées au sol, UN_RCN_TRT, la proportion de ce supplément d'azote contribuant à pTEC_TRT étant formellement ; $pTEC_1 = \left[\dfrac{1-pTEC_{TRT}}{1-pTEC_{RDN}}\right]$. On obtient ainsi le nombre d'unités d'azote supplémentaires attribuables au traitement TRT, par exemple et avantageusement, AZB™ (Claude et Fillion 2004) laissés aux résidus de culture au sol pour assurer leur humification en matière organique du sol selon l'équation ; *crédits azote remboursable (carnac) = $UN_{AZB_{RCN}} \; x \; pTEC_1$.*

Enfin, il est important de remarquer et noter que le nombre d'unités d'azote attribuables à TRT à titre de progrès technique pTEC durable respecte bien les conditions *Progès technique durable | eTRT > pTEC > pTEC_{TRT}.* C'est-à-dire, si et seulement si l'efficacité eTRT est supérieure à l'efficacité durable, pTEC, et celle-ci supérieure à pTEC_TRT, lorsque le *progrès* (niveau) technique du témoin (azb) est nécessairement ≤ 1.

Les unités d'azote supplémentaires attribuables au traitement TRT laissés aux résidus de culture pour assurer leur humification, dits ici *crédits d'azote remboursables,* ou carnac (crédits d'N remboursables, *refundable nitrogen credits*), sont valorisables au prix courant de l'unité d'azote (1 kg-Nf/ha) sur les marchés, ou selon tout mécanisme de compensation reconnu en comptabilité environnementale. Par exemple, à ce jour (11/07/2023) les cours d'engrais-N sous forme de nitrate d'ammonium sont environ à titre d'exemple en 2024 1,00€/UN et 0,75€/UN sous forme d'urée.

Le progrès technique, pTEC_TRT, véritablement durable attribuable au traitement, TRT, à l'essai est ré-évalué à travers le temps par rapport à une courbe de réponse, CRP, à l'azote fertilisant (CRP_N) des rendements azotés durables au sens entendu en constante évolution du fait d'une intelligence collective réalisée numériquement par intelligence artificielle (www.polyor.fr) intégrant progressivement ce type de pTEC_TRT durablement réalisé.

Cela permet non seulement un progrès technique, mais aussi l'évolution de ladite courbe de réponse à titre de référence à partir de laquelle il faut évaluer à l'avenir d'éventuel progrès techniques pTEC_TRT. Cette évolution de la référence CRP évite une sorte de « greenwashing ». En effet, un progrès technique ne doit pas inclure un état de la technique existant adoptable ou déjà adopté par l'homme du métier, mais bel et bien des progrès techniques au-delà des références actuelles. L'agriculteur est rémunéré non pas pour avoir fait ce qu'il doit, mais bien pour avoir fait mieux entrainant une conservation de la matière organique du sol, voire son accumulation, à travers le temps.

**Mode de réalisation de l'invention**

La solution technique conditionne le progrès technique de manière à retenir que les traitements TRT allouant une partie de l'azote supplémentaire aux résidus de culture à titre de retours d'azote au sol RCN selon EP4101280 et EP4252516. Les rendements azotés RDN au-delà de la courbe de réponse CRP sont donc durablement rehaussés *que* si l'efficacité relative de tels traitement eTRT - AZB™ par exemple (Claude et Fillion 204), est détectable.

L'efficacité eTRT, d'AZB™ - ou tout autre traitement TRT, à l'essai sur la parcelle est mesurable à l'aide de parcelles ou « bandes » témoins, voire plus avantageusement par rapport à une référence durable RSQ telle que proposée dans EP3821688, ou encore à un indice agrégé (EP3335536).

*Rappel : La présente invention essentiellement reprise telle que décrite dans FR2307458 est applicable à tout traitement, **TRT**, par rapport à son témoin non-traité, trt, satisfaisant les conditions de durabilité de l'équation 16 ci-dessous. A ce titre, l'efficacité de TRT, eTRT, est un véritable progrès technique durable. Cela dit, le mode préférer de réalisation de l'invention comprend un traitement de fertilisation azotobactérienne AZB™ (Claude et Fillion 2004), mais cela sans limitations quant au choix de TRT rappelons simplement qu'ici à titre exemple ; **AZB**™ ≡ **TRT** | **azb** ≡ **trt***

Dans un premier temps, rappelons certaines notions d'EP3821688, EP4101280 & EP4252516. La performance agronomique de grandes cultures non-*Fabaceae* de différents sols en différent lieux à travers l'Europe ne peuvent être comparés que si elles sont rationalisées (normalisées) ;

$$[\text{Équation 01}] \qquad (run^2)/d_{\text{RUN}}/iSQ = RUN/iSQ = RSQ$$

Le rendement unitaire simple, run (kg-Ng/kg-Ng) est ajusté selon un rendement standard empirique, d_RUN, et un certain indice de la productivité inhérente de la parcelle, iSQ, par exemple, ici, selon Toth et al. 2013. Un algorithme d'IA calcul la référence rRSQ pour la parcelle, et la durabilité ;

$$[\text{Équation.02}] \qquad Durabilité = RSQ/rRSQ = 1.00 \pm 0.05$$

Les RUN réputés durable servent maintenant au rétro-calcul du besoin unitaire de la pratique culturale ou l'itinéraire technique en question, a_AgroNum de manière à pour voir estimer la dose prévisionnelle d'engrais azotée correspondante, TUN (kg-Nf/ha) = [ a_AgroNum · RDN ] ;

$$[\text{Équation 03}] \qquad a\_AgroNum = 1/\sqrt{(RUN \; x \; dRUN)}$$

On peut aussi comme de raison rétro-calculer l'objectif de rendement durable, RDN (kg-Ng/ha) correspondant entant que [ TUN / a_AgroNum ].

La présente invention est donc une amélioration de EP4101280, et une continuation de EP4252516 en ce qu'elle réserve le statut de durabilité à titre de progrès technique, pTEC, qu'aux pratiques culturales et itinéraires techniques ne réduisant pas les teneurs ou les retours en azote des résidus de culture à la suite d'augmentations de leurs performances agronomiques. Faute de quoi, l'adoption de technologies favorisant avant tout la performance agronomique des grandes cultures *non-Fabaceae* faussera à terme l'intelligence collective a priori mais non in fine synonyme de durabilité au sens de EP4101280.

Il est donc, au sens de EP4252516, toujours question d'une méthode générique et interopérable de fertilisation raisonnée pour l'agriculture durable au nveau de la parcelle comprenant l'évaluation de la durabilité de la pratique culturale en œuvre lors de l'élaboration du rendement en grain, RDT, et/ou selon les intentions, habitudes et souhaits de l'agriculteur/rice, ainsi que ;

➢ un protocole de pilotage de la fertilisation azotée pour la dispense, le fractionnement, l'application au champ et/ou l'éventuel pilotage intra-saisonnier de ces différentes fractions de doses prévisionnelles d'engrais azoté, TUN, consistant en plusieurs fractions d'apports successifs d'azote y compris avantageusement l'ajustement du dernier apport prenant en compte l'état de la culture à l'aide d'outils pour l'évaluation l'état de la nutrition azotée de la culture,

➢ une actualisation dynamique au fil du temps de l'objectif de rendement selon la météorologie et/ou les cumuls thermiques et hydriques caractéristiques du lieu de la parcelle agricole consistant en une méthode de prédiction dynamique en cours de saison des rendements, avantageusement azotés RDN, de grandes-cultures *non-Fabaceae,* comportant souvent une analyse bayésienne de la probabilité de réalisation dudit objectif de rendement azoté en cours d'élaboration sur le lieu d'une parcelle agricole en particulier ou encore,

➢ une approche d'agriculture de précision comportant une modulation intra-parcellaire des doses d'intrants à la production appliquées, notamment des susdites doses-prévisionnelles de fertilisation azotée, TUN, consistant en une modulation intra-parcellaire des taux d'applications desdits intrants - matières fertilisantes, pesticides, etc., de manière à apporter aux différentes zones de productivités inhérentes différentes à l'intérieure d'une même parcelle la dose prévisionnelle, TUN, qui lui est prescrite,

Notons qu'en ce sens EP4252516 est caractérisée en ce que ces couples [RDN ↔ TUN] durables sont rapportées sur une seule et unique courbe de réponse des RDN à TUN, *générique* et applicable à l'ensemble des susdites grandes cultures implantées sur la parcelle agricole, peu importe le type et la nature des intrants composant l'itinéraire de la pratique culturale sur cette parcelle, de manières à ce que ces TUN correspondant à ces RDN fassent maintenant office de doses prévisionnelles, et vice et versa, que ces RDN correspondant à ces TUN, d'objectifs de rendements durables.

Or, EP3821688 stipule que *l'évaluation de* la *durabilité* d'une pratique culturale consiste en une méthode d'évaluation et de parangonnage de la durabilité de pratiques culturales en agronomie au niveau de la parcelle agricole comprenant la récolte de l'ensemble de la parcelle sans bandes-essais, à savoir les ;

- détermination d'une *référence pédoclimatique,* rTSQ, pour la parcelle,
- détermination de la *performance agronomique* de l'intrant, TSQ, pour la parcelle,
- mise en relation de TSQ par rapport à rTSQ donnant eTSQ = [TSQ/rTSQ - 1],

et de même pour ce qui concerne eASQ = [ASQ/rASQ - 1] et eQSQ = [QSQ/rQSQ - 1], de manière à comptabiliser complétement l'effet eTRT non seulement de l'intrant à titre de traitement (T) à l'essai sur le rendement observé mais aussi celui du choix de l'objectif de rendement quinquennal moyen (Q) tel qu'affecté par la météorologie de l'année en cour (A).

Au sens de EP4101280, l'intrant en question n'en n'est pas un et que l'évaluation de l'efficacité relative (e) d'un tel pseudo-traitement - un galop d'essai (dry run, angl.), ne modifie donc pas l'actuelle pratique culturale de la parcelle et peut donc être posée comme nulle, i.e. eTRT ≡ 0.

Formellement, cela donne les relations eTRT = [eTSQ - eQSQ - eASQ] et donc eTSQ = [eQSQ + eASQ] lorsque que eQSQ = QSQ/rQSQ et aussi lorsque eASQ = ASQ/rASQ puisque que QSQ est l'objectif de rendement conventionnel pour la parcelle par rapport à un certain indice de productivité en biomasse de la parcelle, iSQ. ASQ est, lui, le potentiel de rendement local ou régional affecté par la climatologie cette année-là (météorologie). On établit donc que rQSQ et rASQ sont les deux références pédoclimatiques propres à QSQ et ASQ, ainsi que ;

○ la durabilité de l'itinéraire technique est assurée lorsque TSQ ≈ rTSQ,
○ si le différentiel TSQ - rTSQ est positif l'itinéraire technique est *trop **intensif*** et l'objectif de rendement doit être réduit, ou dans le cas contraire,
○ si ce différentiel TSQ est négatif l'itinéraire technique est *trop **extensif*** et ce même objectif de rendement doit, ou du moins peut être augmenté.

Le degré de durabilité de l'itinéraire technique est proportionnel à la distance verticale [y:x] suivant l'ordonnée (y) séparant cette valeur de TSQ = rendement/iSQ de la droite [y:x] = [1:1] décrivant une correspondance parfaite entre TSQ et rTSQ,

Notons aussi que TSQ et rTSQ sont exprimés en termes de rendement unitaire (RUN ; $kg\text{-}N_{grain}/kg\text{-}N_{fertilisant}$) de sorte que $(r)RUN = (R)TSQ_{RUN} \times iSQ$, RUN étant ici égale à $run^2/d_{RUN}$ sachant que run est le rendement unitaire *simple* avant correction en fonction de $d_{RUN} = [a \cdot TUN^{-b}]$, les coefficients *a* et *b* provenant de relations empiriques décrivant la décroissance de run avec l'augmentation de TUN exprimé en équivalents $kg\text{-}N_{fertilisant}/hectare$,

La présente invention est, elle, **une méthode interopérable de fertilisation raisonnée en agriculture durable consistant en une interaction entre un opérateur et un utilisateur, l'opérateur transmettant à l'utilisateur des préconisations suite à l'évaluation du progrès technique attribuable à une modification de la pratique culturale par un traitement à l'essais sur la parcelle** caractérisée en ce que l'évaluation qualitative et quantitative dudit progrès technique pTEC comporte maintenant les déterminations suivantes ;

o l'efficacité du traitement TRT est déterminé par rapport au témoin non-traité trt en termes de rendement unitaire de l'azote RUN (kg-Ng/kg-Nf) ajusté par iSQ & d_RUN comme proposé ci-haut **[Équation 04]** ;

$$eTRT_{RUN} = \left[\frac{RUN_{TRT}}{RUN_{trt}}\right]_{RSQ}$$

◦ y compris par rapport à la courbe de réponse CRP à l'azote fertilisant-N de rendements azotés RDN et des doses prévisionnelles d'engrais azotés TUN (kg-N_fertilisant/ha) correspondantes **[Équation 05]** ;

$$pTEC = \left[\frac{RDN_{TRT}}{RDN_{trt}}\right]_{CRP_N}$$

◦ lorsque pTEC_TRT & pTEC_trt proviennent de l'ajustement par rapport à CRP selon TUN_TRT & TUN_trt fonction en puissance d'al & b1 décrivant ces courbes de réponses **[Équations 06 & 07]** ;

$$pTEC_{TRT} = [RDN_{TRT}]_{CRP_N} \,|\, > 1 \,;\, CRP_{N_{TRT}} = a1 \; x \; TUN_{TRT}^{b1}$$

$$pTEC_{trt} = [RDN_{trt}]_{CRP_N} \,|\, \leq 1 \,;\, CRP_{N_{trt}} = a1 \; x \; TUN_{trt}^{b1}$$

◦ et tout cela en posant eTRT_RUN > 1 puisqu'il ne sert évidemment à rien d'évaluer la durabilité de traitements TRT incapables d'augmenter RDN lorsque eTRT_RUN ≤ 1 **[Équation 08]** ;

$$pTEC = \left[\frac{pTEC_{TRT}}{pTEC_{trt}}\right] \,|\, > 1$$

◦ de manière à déterminer le nombre d'unité d'azote supplémentaires ainsi mobilisées par le grain récolté et attribuable à cette efficacité de TRT, UN_RDN_TRT (kg-Ng/ha) **[Équation 09]** ;

$$UN_{RDN_{TRT}} = RDN_{TRT} - RDN_{trt}$$

◦ augmentant du coup les retours au sol d'azote UN_RCN_TRT (kg-N_résidus/ha) attribuables au traitement TRT à l'essai sur la parcelle, par exemple une fertilisation azotobactérienne AZB **[Équation 10]**;

$$UN_{RCN_{TRT}} = [1 - eTEC_{RDN}] \; x \; UN_{RDN_{TRT}} \,|\, eTEC_{RDN} = \left[\frac{pTEC_{TRT}}{eTRT_{RUN}}\right]$$

o en posant une seconde condition de durabilité, à savoir que la pratique culturale témoin trt donne un rendement azoté en dessous ou tout au plus sur la courbe de réponse à l'azote CRP **[Équation 11]** ;

$$pTEC_{trt} \leq 1$$

o en tenant compte des unités d'azote additionnelles mobilisés vers les résidus de culture attribuable eTRT et d'obtenir ainsi le nombre total d'unité d'azote UN_TOT_TRT **[Équation 12]** ;

$$UN_{TOT_{TRT}} = UN_{RDN_{TRT}} + UN_{RCN_{TRT}}$$

◦ et connaître du nombre unités d'azote retournées au sol attribuables au traitement TRT, UN_RCN_TRT, la portion de ce supplément d'azote contribuant expressément à pTEC_TRT étant **[Équation 13]** ;

$$pTEC_1 = \left[\frac{1 - pTEC_{TRT}}{1 - pTEC}\right]$$

o et le nombre d'unités d'azote supplémentaires attribuables au traitement TRT modifiant la pratique culturale mais laissés aux résidus de culture post-récolte pour assurer leur humification selon **[Équation 14]** ;

$$crédits\ azote\ remboursables\ (carnac) = UN_{RCN_{TRT}}\ x\ pTEC_1$$

o sachant que ce nombre précis d'unités d'azote attribuables au traitement TRT à titre de progrès technique durable pTEC_TRT d'une pratique culturale est défendable si et seulement si **[Équation 15]** ;

$$Progrès\ technique\ durable\ |\ eTRT > pTEC > pTEC_{TRT}$$

Ce progrès technique est durable si et seulement si l'efficacité eTRT est supérieure à l'efficacité durable du progrès technique pTEC, et celle-ci supérieure à pTEC_TRT strictement attribuable au traitement TRT modifiant la pratique culturale, et cela lorsque le *progrès* technique attribuable à la pratique culturale témoin non-modifiée, trt, est $\leq 1$ par rapport à la courbe de réponse à l'azote fertilisant CRP. Les coefficients *a1* et *b1* des fonctions en puissance des courbes CRP décrivant les rendements azotés durables RDN selon les taux de fertilisation azotée TUN, et implicites aux susdites équations, à savoir $pTEC_{TRT} = [RDN_{TRT}]_{CRP_N} | > 1$ ; $CRP_{N_{TRT}} = a1\ x\ TUN_{TRT}^{b1}$ pour ce qui est des traitements TRT par rapport à la courbe CRP spécifique à la parcelle, et pareillement pour $pTEC_{trt} = [RDN_{trt}]_{CRP_N} | \leq 1$ ; $CRP_{N_{trt}} = a1\ x\ TUN_{trt}^{b1}$ pour ce qui est des pratiques culturales non-modifiées à titre de témoin trt non-traités par rapport à cette même courbe CRP, sont, eux, obtenus - par exemple et avantageusement tel que proposé et décrit dans EP4252512, par régression non-linéaires des RDN durables au sens entendus sur leurs taux de fertilisation azotée TUN tout aussi durables.

Les unités d'azote supplémentaires attribuables au traitement TRT laissés aux résidus de culture au sol pour assurer leur humification en matière organique sont valorisables à hauteurs du prix courant de l'unité d'azote (1 kg-N_fertilisant/ha) sur les marchés, ou encore selon tout mécanisme de compensation reconnu en comptabilité environnementale. Le progrès technique pTEC durable attribuable au traitement à l'essai TRT est, lui, évalué à travers le temps par rapport à une courbe de réponse des rendements azoté RDN l'azote fertilisant TUN au sens de EP4252516

TSQ et rTSQ, lorsque eTRT $\equiv$ 0, i.e. en absence de modifications de la pratique culturale lors d'un galop d'essai sans nouveaux intrants à l'essai sur la parcelle, font ici référence aux rendements observés - ou actuels, RSQ, et rendements de références durables, rRSQ, respectivement, ces derniers, rRSQ, faisant office de parangons (*benchmark,* angl.) de durabilité.

Par durable il est convenu que les RSQ_RUN trop élevés ou trop faibles par rapport à la valeur rRSQ_RUN durable correspondant sont systématiquement exclus du jeu de données prédictif. RSQ & rRSQ sont jugés suffisamment similaires lorsque la différence entre RSQ et rRSQ exprimée en termes de RUN, i.e. RSQ_RUN & rRSQ_RUN, est de +/- 5 à 15%, plus précisément +/- 8 à 12% et avantageusement environ +/- 10% de celle de rRSQ, lorsque que ces RSQ & rRSQ exprimés en termes de RUN (kg-N_grain/kg-N_fertilisant).

C'est-à-dire, lorsque rendement azoté, RDN, par kg-N_fertilisant (TUN; kg-N_fertili-sant/ha) calculé comme le rapport RUN = $run^2/d_{RUN}$ sachant que, encore une fois, run est le rendement unitaire et $d_{RUN} = [a \cdot TUN^{-b}]$, *a* et *b* étant des coefficients empiriques décrivant la diminution progressive de l'exécution avec l'augmentation de TUN applicable à l'ensemble des susdites grandes cultures, se situant entre 1200 $\leftrightarrow$ 1500 et 1,40 $\leftrightarrow$ 1,60, respectivement, mais plus avantageusement en ce que *a* est égale à 1400 et *b* à 1,50.

Les références pédoclimatiques rTSQ, rRSQ, rQSQ et rASQ sont déterminées à l'aide d'une méthode prédictive dite d'intelligence artificielle comprenant un vaste ensemble de variables agropédoclimatiques (Var_APC).

La courbe de réponse à l'azote comprenant les différents taux de fertilisation azotée et leurs objectifs de rendements azotée, RDN, durables correspondants est interopérable avec les susdites technologies de fertilisation raisonnée en agriculture durable via une quelconque technologies de communications, à savoir des réseaux cellulaires, wifi, des cartes mémoires, *clouds* (sic, angl.), clefs USB insérables, ou encore plus par téléphone ou facsimilée, ou même par simple activations manuelle, vocale ou écrite s'il le fallait.

*In fine,* pour que le progrès technique soit durable au sens entendu, il faut que l'efficacité relative eTRT [équation 4] soit supérieure à l'efficacité durable, pTEC [équation 8], et cette dernière supérieure à pTEC_TRT [équation 6]. Si cette triple conditionnalité [équation 15] n'est pas satisfaite, il n'y aura pas suffisamment d'azote supplémentaire pour alimenter les grains ET les résidus de culture surabondants du fait de ce même progrès technique.

Il faut aussi que l'état de la technique, i.e. le « progrès technique » du témoin (azb), soit *en dessous* de (inférieur à) la courbe de réponse durable, CRP. Ici, un pTEC_azb supérieur à 1,00 signifierait que le témoin non traité est déjà lui-même trop élevé rendant un progrès technique au-delà de ce témoin nécessairement non durable. Or, si pTEC_azb $\leq 1$ il en découle selon l'équation 8 qu'pTEC > 1, d'où l'équation 15.

C'est ici qu'apparait l'aspect tant qualitatif que quantitatif de l'évaluation du progrès technique, pTEC. Qualitatif parce que l'équation 15 ne propose que des inégalités à respecter. Quantitatif parce que les crédits en unités d'azote, (équation 14) *rémunérables* sont déterminés avec une très grande précision.

Pour résumer. Ayant posé selon l'équation 11 pTEC_trt ≤ 1 afin de s'assurer de la durabilité de pTEC_TRT > 1, l'équation 6 donne la proportion de ce supplément d'azote attribuable au traitement TRT et laissé aux résidus de culture au sol à titre de progrès technique durable au-delà de pTEC_TRT = 1, i.e. eTR_RCN_pTEC_1. Enfin, pour obtenir le nombre d'unités d'azote, UN, à titre de progrès technique durable capables d'assurer l'humification desdits résidus de culture on multiplie simplement pTEC_1 par UN_RCN_TRT selon l'équation 14 (Tableau 3).

Il est donc permis d'intensifier la durabilité en production agronomique de grandes cultures non-*Fabaceae*. La beauté de cette approche à l'agriculture durable par voie de conservation de la matière organique du sol réside dans sa précision, son ergonomie et son impartialité, et cela à travers l'Europe. Les références durables rRSQ (EP 4101280) sont reproduites pour chacune des parcelles agricoles à travers l'Europe avec un très haut degré de précision, et permettent ainsi d'évaluer avec précision eTRT en fonction de rendements unitaires RUN d'itinéraires techniques et pratiques culturales durables.

À partir des besoins unitaires des pratiques culturales et itinéraires techniques - a_AgroNum, on rétro-calcul les doses prévisionnelles d'engrais azotés TUN correspondant aux objectifs de rendements azotés RDN durables (EP4252516). Notons qu'il n'est plus nécessaire d'échantillonner la matière organique de la parcelle. Seuls les coordonnées GPS du lieu où est située la parcelle suffisent puisque la base de données APC est constituée d'un vaste ensemble de data géoréférencés préexistants (EP3821688) dont les algorithmes d'IA sont friands.

Puisque la durabilité est assurée par un enrichissement en azote de résidus de culture progressif et fonction de TUN, le coût nutritionnel (*nutrient cost,* angl ; Richardson et al. 2014) est aussi nécessairement comptabiliser, ce qui n'est pas le cas dans la plupart de approches dites bas-carbone (*carbon-farming*) 4/1000 (Projet 4p1000 2022). Cela représente une avancée en fertilisation raisonnée pour l'agriculture durable par conservation de la matière organique du sol.

Cette approche, dite AgroNum™, est impartiale. Notons qu'il n'existe pas véritablement de consensus désignant telle ou telle pratique/itinéraire comme plus ou moins durable en tous lieux. Les calculs et abaques faisant aujourd'hui office de bilans ne font que reproduire les aprioris. De plus, il n'existe toujours pas d'approche comptable capable de chiffrer précisément les bilans carbone ou azote des sols. AgroNum permet de calculer précisément le nombre d'unités d'azote, UN, laissés aux résidus de culture pour assurer durablement leur humification en matière organique du sol. La rémunération des agriculteurs se fera sur cette base au lieu des habituels crédits carbones actuellement proposés en agriculture bas-carbone (*carbon-farming,* angl.).

**Exemples d'application à titre de validation**

Dans un premier temps, démontrons comment certains traitements TRT, à base de fertilisation azotobactérienne AZB™ par exemple, modifient et intensifient durablement les pratiques culturales.

Des données agronomiques pour un nombre de ces TRT AZB™ à l'essais sur autant de parcelles sont résumées au Tableaux 1, 2 & 3, et plus synoptiquement au Tableau 4. Ces traitement TRT, plus ou moins efficaces par rapport aux témoins trt, ou encore par rapport à courbe de réponse CRP, vont générer plus ou moins de crédits azote remboursables carnac.

**Tableau 1** : Données agronomiques de quinze (15) pratiques culturales réputées durables selon les conditions formalisées à l'équation 16. Les coordonnées latitude et longitude, ainsi que le code NUTS2 (niveau 2) sont indiqués. Ces données proviennent essentiellement du sud de la France de cultures de blé tendre d'hiver, BHT, d'orge et de blé dur d'hiver, BDH, sur résidus de culture au sol, RCS, de colza, CLZ, de maïs-grain, ZEA, de BTH, de sorgho, SRG, et de tournesol, TSL. L'indice de productivité, iSQ (Toth et al. 2013), ainsi que les coefficients de la courbe de réponse à l'azote, CRP_N (EP4252516) calculés par AgroNum™ (www.polyor.fr) sont indiqués.

**Tableau 2** : Performance agronomique et durabilité des pratiques culturales au Tableau 1. Les taux de fertilisation azotée TUN (kg-N_fertilisant/ha), rendements en grain RDT (kg-grain/ha, 100% MS), azotés RDN (kg-N_grain/ha), et unitaires RUN (kg-N_grain/kg-N_fertilisant) pour les traitements TRT de fertilisation azotobactérienne, AZB, et leurs témoins non-traités trt, sont indiqués, ainsi que les objectifs RDN durables au sens d'EP4101280 pour TRT et trt, les taux de fertilisation TUN pouvant varié d'une pratique culturale à l'autre, selon les équations 6 & 7. C'est par rapport à ces RDN durables que le progrès technique attribuable à TRT est évalué selon l'équation 6 et rapporté au Tableau 3.

**Tableau 3** : Évaluation de la durabilité du progrès technique attribuable à TRT, pTEC_TRT par rapport à celui d'trt (« progrès » du témoin non-traité), pTEC_trt, dit eTRT_RDN exprimé en RDN selon les équations 6 à 9. Connaissant la quantité d'azote sur-mobilisée durablement par les grains, UN_RDN_TRT (équation 9), on évalue selon l'équation 10 celle laissée aux résidus de culture pour en assurer l'humification en matière organique du sol, UN_RCN_TRT, fonction d'eTEC_RDN, sachant qu'eTEC_RCN = [1 - eTEC_RDN] et que la quantité totale d'azote sur-mobilisée par la culture est, selon l'équation 13, la somme d'UN_RDN_TRT et d'UN_RCN_TRT.

**Tableau 4** : Résumé de l'ensemble des itinéraires techniques, iTEC, apportant un progrès (technique), pTEC, par rapport au précédent seuil de durabilité défini par la courbe de réponse à l'azote, CRP_N du fait de la conditionnalité imposée à l'équation 15, à savoir **eTRT > pTEC > pTEC_TRT.**

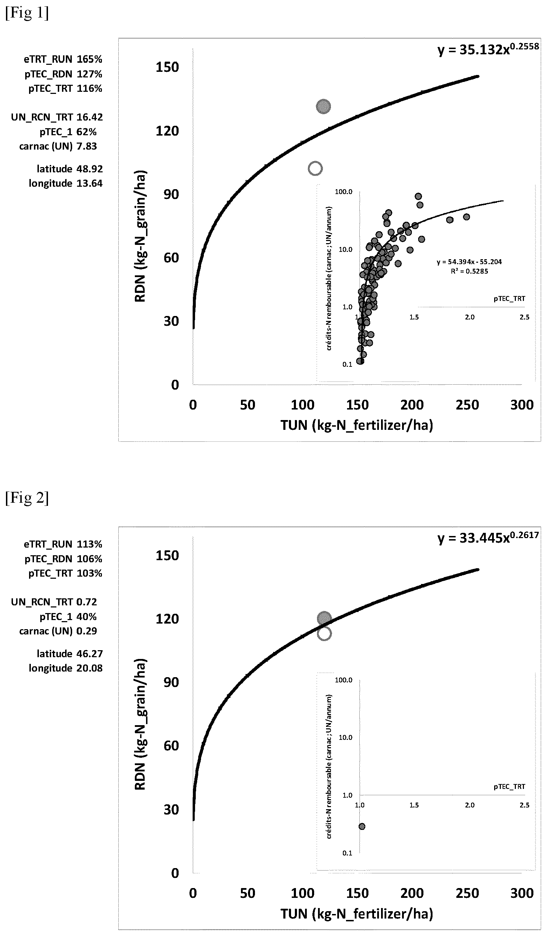

Or, il existe des traitements TRT non-azotobactériens aussi efficace ; la présente invention s'applique à tout traitement TRT pouvant modifier durable les pratiques culturale en intensifiant les niveau de production, y compris les rendements azotés RDN et unitaire RUN. Quelques exemple de tel intensification durables plus ou moins marquées sont décrite graphiquement aux Figure 1 à 4.

**Figure 1** : Progrès technique durable et coordonnées moyens d'un ensemble de quelques 118 traitements TRT par rapport à leurs témoin non-traitée trt. Ces traitement modifiant les pratiques culturales sont conformes aux critères de durabilité de l'équation 15. En moyenne, TRT requiert donc un peu moins d'azote, TUN, et augmente les rendements unitaires de 65% par rapport aux témoins trt, et les rendements azotés RDN de 16% par rapport à la courbe de réponse CRP. Cet effet traitement permet de dégagé de 16.42 unités d'azote UN pour les résidus de culture, dont 62% (7.83 UN) à titre de crédits azote remboursables carnac, soit la portion de cet azote laissé au résidus de culture au-delà du seuil de durabilité précédemment établit représenté ici par la courbe de réponse CRP. Le nombre de crédits azote camac est donc plus ou moins proportionnel au progrès technique par rapport à cette durabilité de référence CRP strictement attribuable audits traitements TRT (en abîme). Cette corrélation n'est pas parfaites, loin de là, parce que le nombre de crédits carnac dépend aussi de la position du témoin trt par rapport à la courbe de réponse CRP.

Rappelons que par rapport à la courbe CRP, seule une partie - pTEC_1, l'azote enrichissant les résidus de culture représente un véritable progrès technique durable attribuable à TRT ; ce sont ces unités supplémentaires d'azote laissé aux résidus de culture qui vont contribuer à leur humification. L'agriculteur assurant ce retour d'azote au sol pour fin de conservation et/ou accumulation de la matière organique doit être remboursé pour service à l'environnement.

**Figure 2** : Cas de figure tiré de l'ensemble présenté à la Figure 1. Bien que l'efficacité relative eTRT détectable et de 13%, elle se traduit par une faible nombre de crédits azote carnac (0.29) du fait d'un progrès technique pTEC en termes de RDN que de 6%, dégageant moins d'un unité UN (0.79) pour les résidus de culture RCN. Pire, seulement 40% de ces 790 g d'azote laissé au résidus de culture est véritablement au-delà de la courbe de réponse CRP, d'où les 290 g carnac. Cela dit, même de tels niveaux de carnac apparemment insignifiant peuvent générer quelque 30€ à 50€ pour l'exploitation. Mais bon. La Figure 2 donc illustre un cas de figure bien peu rémunérateur.

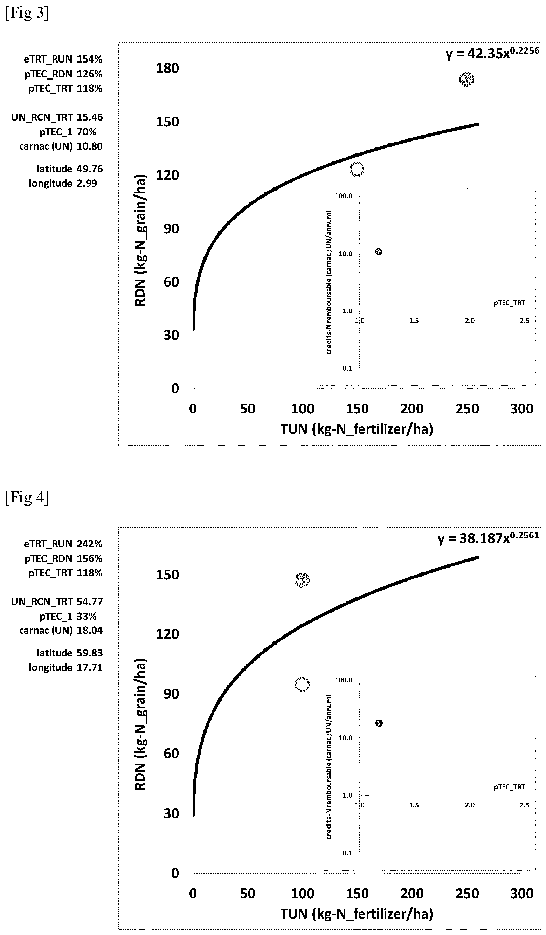

**Figure 3** : Cas de figure plus rémunérateur pour l'agriculteur puisque l'essentiel du progrès technique est durable et environ 70% des 15 (15.46) UN supplémentaires attribuables à TRT laissés aux résidus de culture est associé à une augmentation de RDN au-delà du précédent seuil de durabilité. Ces 10.80 unités d'azote par hectare et par année sont donc des crédits azote remboursables carnac de l'ordre de 1000 € par année pour une exploitation de 100 hectares en grandes cultures non-*Fabaceae*. Cette rémunération est pérenne puisque ces crédits azote sont en passe d'être émis à chaque années.

**Figure 4** : Cas de figure avec un imposant effet traitement eTRT_RUN de l'ordre de 242% augmentant le rendement azoté RDN de 156% à ce même taux de fertilisation azoté TUN. Rappelons que eTRT est exprimé en RUN = $run^2/d\_RUN$, et que cela explique cette forte augmentation de RUN, supérieure à celle de RDN ; voir la documentation technique AgroNum™ (www.polyor.fr). Ce cas de figure où seulement une partie de l'efficacité d'un traitement TRT se traduit en crédits azote remboursables est fréquent. En effet, souvent le traitement TRT améliorer surtout la durabilité. Ce n'est qu'au-delà des objectifs de rendements azotés durables RDN prévus par courbe de réponse CRP qu'il y a progrès technique pTEC_TRT durable, et donc rémunération de l'agriculteur à hauteur de pTEC_1 = 33% des 55 (54.77) unités d'azote supplémentaires laissés aux résidus de culture, soit quand même une rémunération de l'ordre de 18 (18.04) € par hectare et par année, *pérennement* (sic) si la pratique culturale modifiée est maintenue à travers le temps.

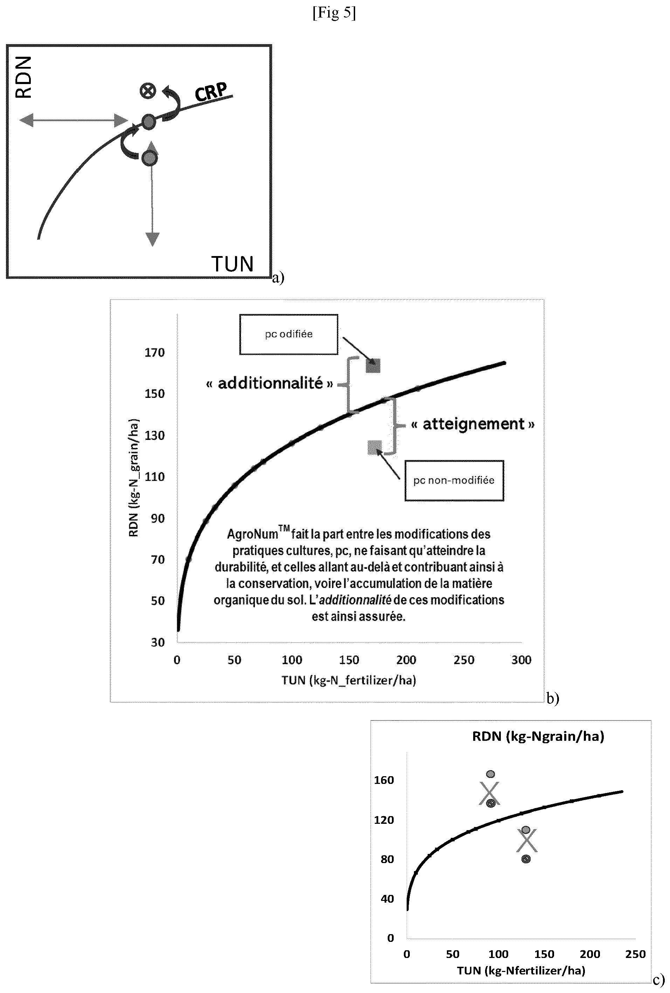

L'utilisateur peut maintenant, i) modifier la pratique culturale de manière à ce que RDN soit repérable sur la courbe de réponse CRP, ou encore ii) transmettre à l'opérateur les RDN & TUN correspondants de la pratique culturale témoin d'une parcelle voisine, voire de cette même parcelle lors d'une campagne antérieure (**Figure 5**). AgroNum compare ces deux pratiques culturales, et calcul l'efficacité de cette modification TRT de la pratique culturale témoin trt. *a)* L'utilisateur d'AgroNum peut aussi transmette un RDN témoin qui permettra le calcul de *crédits azote remboursables* par rapport à la courbe de réponse à l'azote CRP. *b)* Cet courbe de réponse permet de faire la part entre les modifications des pratiques cultures, pc, ne faisant qu'atteindre la durabilité, et celles allant au-delà et contribuant ainsi à la conservation, voire l'accumulation de la matière organique du sol. AgroNum distingue les modifications des pratiques cultures ne faisant qu'atteindre la durabilité, de celles allant au-delà et contribuant ainsi à la conservation de la matière organique. *L'additionnalité* de ces modifications est ainsi assurée. *c)* En accord avec les équation 7, 8, 9 & 12, une illustration des conditions de réussite des modification des pratiques culturales pc en termes de rendements azotés RDN. Les pratiques culturales témoins, non-modifiées (cercles bleus barrés, inférieurs), doivent être *en dessous* de la courbe de réponse, et, les rendements azotés RDN après modifications (cercles vert pleins) doivent être *supérieurs* aux témoins non-modifiés.

AgroNum comparer l'efficacité relative en terme de RUN de cette modification attribuable au traitement TRT, *eTRT* = (*RUN_TRT*)/(*RUN_trt*), au progrès technique pTEC de trt et TRT de part et d'autre de CRP. Cette efficacité technique *eTEC* = (*pTEC_TRT*)/*eTRT* permet - sous certaines conditions et selon les calculs explicitées dans FR2307458, de connaître la quantité d'azote laissée aux résidus de culture retournés au sol plutôt que récoltée et exportée de la parcelle dans les grains.

Cette restitution de l'azote contenu dans les résidus de culture est donc un service à l'environnement, cet azote contribuant à l'humification complète de ces résidus en matière organique. Ces unités d'azote (kg-N/ha/année) peuvent donc être remboursés à l'agriculteur qui aurait autrement pu le récolter à profit dans le grain. pTEC_TRT est donc ici synonyme d'intensification de l'agriculture durable, à condition que eTRT > pTEC_TRT.

Ces crédits d'azote remboursables carnac sont une alternative aux crédits de carbone dérivés de l'agriculture du carbone. Ces carnac récompensent, sans frais supplémentaires pour l'utilisateur, les efforts de conservation des sols existants en déduisant la quantité d'azote supplémentaire laissée aux résidus de culture à la récolte, azote qui aurait autrement pu être récolté dans le grains à profit. Cet azote apporté au résidus de culture représente donc un précieux service à l'environnement, et devient donc *remboursable,* au prix du marché de l'azote fertilisant, du nitrate d'ammonium, par exemple.

Souvent, le crédits d'azote remboursables carnac seront *faibles* par rapport aux crédits carbone dérivés de l'agriculture du carbone publicisés mais, encore une fois, sans coûts supplémentaires pour l'utilisateur. Mieux, ces crédits d'azote remboursables garantissent *l'additionnalité* puisque seuls les résidus d'azote *au-delà* de la durabilité de base sont valorisés. De plus, ce système de crédit est pérenne, et implique le plus souvent des augmentation de RDN. Enfin, cette approche à la comptabilité environnementale an agriculture durable favorise surtout la conservation des sols au lieu de de spéculer sur les stocks de carbone organique en sols arable (*cf mitigation deterrence* ; Price et al. 2024).

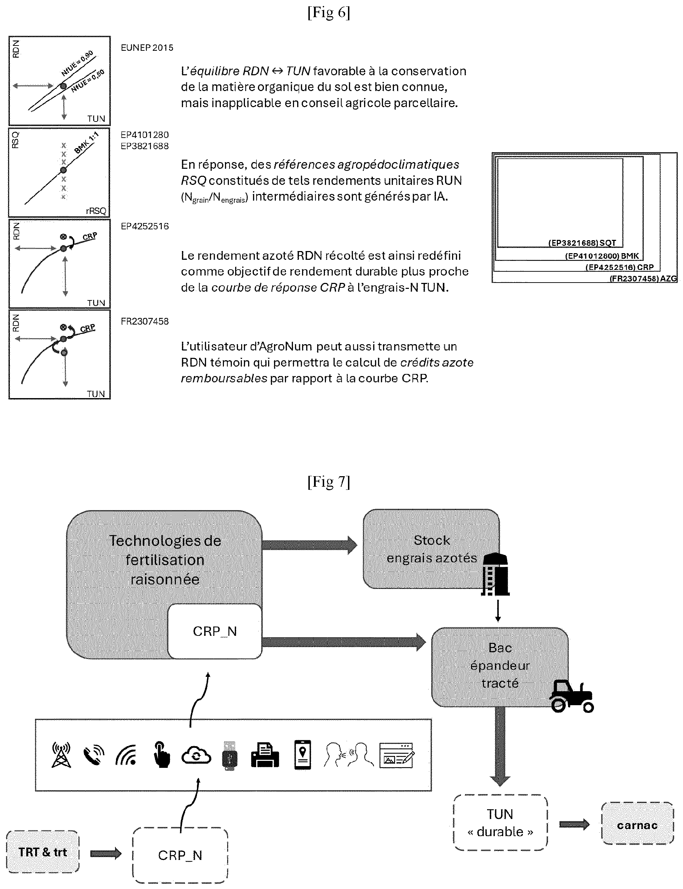

**Figure 6** : Résumons le positionnement de l'invention par rapport à l'état de la technique. A priori, *l'équilibre RDN ↔ TUN* favorable à la conservation de la matière organique du sol est bien connue (EUNEP 2015), mais inapplicable en conseil agricole parcellaire. En réponse, des *références agropédoclimatiques RSQ* constitués de tels rendements unitaires RUN ($N_{grain}/N_{engrais}$) intermédiaires sont générés par IA selon EP3821688 et EP4101280. Cela permet de redéfinir le rendement azoté RDN récolté entant qu'objectif de rendement durable plus proche de la *courbe de réponse CRP* à l'engrais-N TUN selon EP4252516. L'utilisateur d'AgroNum peut maintenant transmette un RDN témoin qui permettra le calcul de *crédits azote remboursables* par rapport à la courbe CRP provisoirement selon FR2307458, et dorénavant la présente invention.

**Figure 7** : Positionnement de la présente invention en fertilisation raisonnée, y compris à l'aide d'outils d'agriculture de précision. On voit qu'il est maintenant possible de comparer les rendements azotés RDN obtenus des traitement TRT modifiant la pratique culturale témoin trt à ceux de la courbe de réponse à l'azote fertilisant CRP (alias CRP_N). Pour l'utilisateur, la seule modification apparente sera l'obtention, non seulement d'un taux de fertilisation azotée TUN recommandé correspondant à son objectif de rendement durable RDN, mais aussi un estimé du nombre de crédits azote remboursables carnac du fait du progrès technique conditionné au sens de la présente invention, et plus particulièrement de l'équation 15. L'utilisateur obtient donc une dose prévisionnelle pour son objectif de rendement RDN, mais aussi une information sur les moyens financiers qui pourraient éventuellement lui être octroyés à titre de remboursement pour service à l'environnement.

En terminant au, **Tableau 5** un script en langage R ([www.r-proiect.org/](http://www.r-proiect.org/)) facilitant la réalisation de l'invention. Ce script code pour une simple fonction interactive à l'écran, et reprend autant que possible les sigles définis dans le texte.

**Références**

Berta et Roux 2024. The endless expansion of carbon offsetting: sequestration by agricultural soils in historical perspective. Cambridge Journal of Economics 2024, 1 of 20 https://doi.org/10.1093/cje/beae008

Bettigole et al. 2023. Optimizing Sampling Strategies for Near-Surface Soil Carbon Inventory: One Size Doesn't Fit All. Soil Syst. (7) : 27. https://doi.org/10.3390/ soilsystems7010027

Brundtland et al. 1987. Our common future : Report of the World Commission on Environment and Development. United Nations / https://sustainabledevelopment.un.org/content/documents/5987our-common-future.pdf

Claude et Fillion. 2004. Effet de l'apport d'un inoculum bactérien aux résidus de culture de maïs-grain au sol sur le rendement et la qualité de blés d'hiver panifiables en France. Agrosol. 15 (1) : 23-29 / https://edn-cms.f-static.net/uploads/2922902/normal_5e8b1235c3bd4.pdf

EUNEP 2015 (EU Nitrogen Expert Panel). Nitrogen Use Efficiency (NUE) an indicator for the utilization of nitrogen in food systems. http://www.eunep.com/

Ghali et al. 2014. L'agriculture écologiquement intensive. Une approche économique. Économie rurale, 341 | mai-juin 2014, en ligne le 15 mai 2016, consulté le 30 avril 2019. URL : http://journals.openedition.org/economierurale/4338 ; DOI : 10.4000/economierurale.4338

Griffon et al. 2013. Qu'est-ce que l'agriculture écologiquement intensive ? Éditions Quæ RD 10 78026 Versailles Cedex, France / www.quae.com

Hoglund et al. 2020. Removing Carbon Now : How can companies and individuals fund negative emissions technologies in a safe and effective way to help solve the climate crisis? Oxfam discussion papers, August 2020 / www.oxfam.org

Ladha et al. 2016. Global nitrogen budgets in cereals - A 50-year assessment for maize, rice, and wheat production systems. SCIE NT IF IC RepoRts | 6:19355 | DOI: 10.1038/srep19355 / www.nature.com/scientificreports/

Price et al. 2024. Biochar carbon markets: A mitigation deterrence threat. Environmental Science and Policy 154 - 103704 https://doi.org/10.1016/j.envsci.2024.103704

Projet 4p1000 2022. Plan stratégique. 2$^{ième}$ version, juin 2022. 4p1000 - Les sols pour la sécurité alimentaire et le climat. Secrétariat exécutif / www.4p1000.org / secretariat@4p1000.org / https://www.linkedin.com/company/4p1000initiative/

Richardson et al. 2014. The inorganic nutrient cost of building soil carbon. Carbon Management 5(3).

Soenen et al. 2021. Méthode Label Bas-Carbone Grandes Cultures (version 1.0). 133p / Disponible sur le site du MTE (https://www.ecologie.gouv.fr/label-bas-carbone)

Van Groenigen et al. 2017. Sequestering Soil Organic Carbon: A Nitrogen Dilemma. Environ. Sci. Technol. / DOI: 10.1021/acs.est.7b01427

[Table 1]

| id_site_client| | id_iTEC | NUTS2 | LAT | LON | annee | RCS | CLT | iSQ | a1 | b | Na1 |
|---|---|---|---|---|---|---|---|---|---|---|---|
| 1 | 1 | FRJ2 | 43,41050 | 1,19140 | 2012 | CLZ | BTH | 7,6000 | 35,97 | 0,2520 | 119,63 |
| 1 | 2 | FRJ2 | 43,41050 | 1,19140 | 2012 | CLZ | BTH | 7,6000 | 35,97 | 0,2520 | 119,63 |
| 2 | 4 | FRJ2 | 43,36530 | 1,37580 | 2012 | CLZ | BTH | 7,6000 | 35,98 | 0,2555 | 122,30 |
| 7 | 10 | FRJ2 | 43,50390 | 1,57020 | 2013 | ZEA | BTH | 7,6811 | 34,92 | 0,2547 | 116,65 |
| 9 | 12 | FRJ2 | 43,11490 | 1,53480 | 2012 | BTH | BTH | 7,6000 | 33,31 | 0,2517 | 107,43 |
| 14 | 34 | FRJ2 | 43,27320 | 1,34280 | 2012 | SRG | Orge | 8,1897 | 36,81 | 0,2542 | 125,18 |
| 17 | 38 | FRJ2 | 43,68990 | 1,77370 | 2012 | TSL | BTH | 7,5705 | 32,65 | 0,2573 | 107,73 |
| 22 | 44 | FRJ2 | 43,37030 | 1,17080 | 2013 | CLZ | BTH | 6,8000 | 33,30 | 0,2517 | 107,42 |
| 25 | 47 | FRJ2 | 43,17200 | 1,55200 | 2013 | TSL | BDH | 7,5574 | 35,92 | 0,2506 | 118,49 |
| 34 | 63 | FRI3 | 46,41160 | 1,02580 | 2013 | ZEA | BTH | 6,4000 | 28,64 | 0,2428 | 83,79 |
| 36 | 72 | FRBO | 48,27210 | 1,29030 | 2013 | ZEA | BTH | 8,4628 | 38,98 | 0,2575 | 138,45 |
| 36 | 74 | FRBO | 48,27210 | 1,29030 | 2013 | ZEA | BTH | 8,4628 | 38,98 | 0,2575 | 138,45 |
| 38 | 78 | FRJ2 | 43,52740 | 1,50550 | 2000 | BTH | BTH | 8,3659 | 36,26 | 0,2519 | 120,73 |
| 38 | 81 | FRJ2 | 43,52740 | 1,50550 | 2001 | BTH | BTH | 8,3659 | 36,26 | 0,2519 | 120,73 |
| 41 | 86 | FRE2 | 49,48360 | 1,79540 | 2013 | ZEA | BTH | 6,7295 | 46,79 | 0,2455 | 163,13 |

[Table 2]

| id_site_client | id_iTEC | TUN_trt | RDT_trt | RDN_trt | RUN_trt | TUN_TRT | RDT_TRT | RDN_TRT | RUN_TRT | eTRT_RUN | CRP_trt | CRP_TRT |
|---|---|---|---|---|---|---|---|---|---|---|---|---|
| 1 | 1 | 174 | 57,40 | 126,00 | 0,8597 | 174 | 82,25 | 132,93 | 0,9568 | 1,1130 | 132,01 | 132,01 |
| 1 | 2 | 154 | 57,40 | 126,00 | 0,9138 | 154 | 86,21 | 154,73 | 1,3780 | 1,5080 | 128,01 | 128,01 |
| 2 | 4 | 190 | 60,10 | 132,00 | 0,9029 | 170 | 68,63 | 149,95 | 1,2318 | 1,3643 | 137,47 | 133,62 |
| 7 | 10 | 152 | 59,60 | 107,00 | 0,6633 | 152 | 72,89 | 136,85 | 1,0851 | 1,6358 | 125,57 | 125,57 |
| 9 | 12 | 155 | 51,50 | 109,00 | 0,6816 | 155 | 55,88 | 118,81 | 0,8099 | 1,1881 | 118,57 | 118,57 |
| 14 | 34 | 102 | 45,72 | 114,04 | 0,9197 | 82 | 55,78 | 114,04 | 1,0258 | 1,1153 | 119,26 | 112,82 |
| 17 | 38 | 152 | 57,36 | 102,81 | 0,6123 | 112 | 61,95 | 115,14 | 0,8948 | 1,4613 | 118,93 | 109,94 |
| 22 | 44 | 170 | 52,23 | 112,81 | 0,6971 | 170 | 68,84 | 136,83 | 1,0257 | 1,4714 | 121,31 | 121,31 |
| 25 | 47 | 210 | 53,38 | 135,79 | 0,9089 | 210 | 65,82 | 166,48 | 1,3661 | 1,5031 | 137,21 | 137,21 |
| 34 | 63 | 180 | 51,85 | 90,04 | 0,4316 | 180 | 59,63 | 104,74 | 0,5840 | 1,3532 | 101,08 | 101,08 |
| 36 | 72 | 180 | 83,13 | 147,74 | 1,1620 | 160 | 92,27 | 164,31 | 1,5246 | 1,3120 | 148,45 | 144,02 |
| 36 | 74 | 180 | 73,95 | 137,06 | 1,0002 | 160 | 80,61 | 147,47 | 1,2280 | 1,2278 | 148,45 | 144,02 |
| 38 | 78 | 150 | 67,28 | 122,11 | 0,8696 | 150 | 76,03 | 139,31 | 1,1318 | 1,3016 | 128,11 | 128,11 |
| 38 | 81 | 150 | 63,20 | 117,38 | 0,8036 | 120 | 68,26 | 127,50 | 1,0600 | 1,3192 | 128,11 | 121,11 |
| 41 | 86 | 50 | 55,01 | 107,00 | 1,1565 | 30 | 55,01 | 108,07 | 1,5231 | 1,3169 | 122,22 | 107,82 |

[Table 3]

| id_site_client | id_iTEC | pTEC_trt | pTEC_TRT | pTEC | eTEC_RDN | eTEC_RCN | UN_RDN_TRT | UN_RCN_TRT | UN_TRT_TOT | pTEC_1 | carnac |
|---|---|---|---|---|---|---|---|---|---|---|---|
| 1 | 1 | 0,9545 | 1,0070 | 1,06 | 90,47% | 9,53% | 6,93 | 0,73 | 7,66 | 0,1273 | 0,09 |
| 1 | 2 | 0,9843 | 1,2088 | 1,23 | 80,16% | 19,84% | 28,73 | 7,11 | 35,84 | 0,9156 | 6,51 |
| 2 | 4 | 0,9602 | 1,1222 | 1,17 | 82,26% | 17,74% | 17,95 | 3,87 | 21,82 | 0,7243 | 2,80 |
| 7 | 10 | 0,8521 | 1,0899 | 1,28 | 66,62% | 33,38% | 29,85 | 14,96 | 44,81 | 0,3221 | 4,82 |
| 9 | 12 | 0,9193 | 1,0021 | 1,09 | 84,34% | 15,66% | 9,81 | 1,82 | 11,63 | 0,0228 | 0,04 |
| 14 | 34 | 0,9562 | 1,0107 | 1,06 | 90,62% | 9,38% | 0,00 | 0,00 | 0,00 | 0,1882 | 0,00 |
| 17 | 38 | 0,8644 | 1,0473 | 1,21 | 71,67% | 28,33% | 12,34 | 4,88 | 17,21 | 0,2236 | 1,09 |
| 22 | 44 | 0,9299 | 1,1280 | 1,21 | 76,66% | 23,34% | 24,03 | 7,32 | 31,34 | 0,6008 | 4,39 |
| 25 | 47 | 0,9896 | 1,2133 | 1,23 | 80,72% | 19,28% | 30,69 | 7,33 | 38,02 | 0,9437 | 6,92 |
| 34 | 63 | 0,8908 | 1,0362 | 1,16 | 76,57% | 23,43% | 14,70 | 4,50 | 19,20 | 0,2216 | 1,00 |
| 36 | 72 | 0,9952 | 1,1409 | 1,15 | 86,96% | 13,04% | 16,58 | 2,49 | 19,06 | 0,9622 | 2,39 |
| 36 | 74 | 0,9233 | 1,0239 | 1,11 | 83,40% | 16,60% | 10,40 | 2,07 | 12,47 | 0,2196 | 0,45 |
| 38 | 78 | 0,9531 | 1,0874 | 1,14 | 83,54% | 16,46% | 17,20 | 3,39 | 20,59 | 0,6202 | 2,10 |
| 38 | 81 | 0,9162 | 1,0528 | 1,15 | 79,80% | 20,20% | 10,12 | 2,56 | 12,68 | 0,3541 | 0,91 |
| 41 | 86 | 0,8755 | 1,0023 | 1,14 | 76,11% | 23,89% | 1,07 | 0,34 | 1,41 | 0,0161 | 0,01 |

15

[Table 4]

| id_site_clien | 1 | 1 | 2 | 7 | 9 | 14 | 17 | 22 | 25 | 34 | 36 | 36 | 38 | 38 | 41 | mean |
|---|---|---|---|---|---|---|---|---|---|---|---|---|---|---|---|---|
| id_iTEC_TRT | 1 | 2 | 4 | 10 | 12 | 34 | 38 | 44 | 47 | 63 | 72 | 74 | 78 | 81 | 86 | |
| NUTS2 | FRJ2 | FRJ2 | FRJ2 | FRJ2 | FRJ2 | FRJ2 | FRJ2 | FRJ2 | FRJ2 | FRI3 | FRBO | FRBO | FRJ2 | FRJ2 | FRE2 | NA |
| LAT | 43,4105 | 43,4105 | 43,3653 | 43,5039 | 43,1149 | 43,2732 | 43,6899 | 43,3703 | 43,1720 | 46,4116 | 48,2721 | 48,2721 | 43,5274 | 43,5274 | 49,4836 | NA |
| LON | 1,19140 | 1,19140 | 1,37580 | 1,57020 | 1,53480 | 1,34280 | 1,77370 | 1,17080 | 1,55200 | 1,02580 | 1,29030 | 1,29030 | 1,50550 | 1,50550 | 1,79540 | NA |
| CLT | BTH | BTH | BTH | BTH | BTH | Orge | BTH | BTH | BDH | BTH | BTH | BTH | BTH | BTH | BTH | NA |
| iSQ | 7,6000 | 7,6000 | 7,6000 | 7,6811 | 7,6000 | 8,1897 | 7,5705 | 6,8000 | 7,5574 | 6,4000 | 8,4628 | 8,4628 | 8,3659 | 8,3659 | 6,7295 | 7,665 |
| a1 | 35,97 | 35,97 | 35,98 | 34,92 | 33,31 | 36,81 | 32,65 | 33,30 | 35,92 | 28,64 | 38,98 | 38,98 | 36,26 | 36,26 | 46,79 | 36,05 |
| Na1 | 119,63 | 119,63 | 122,30 | 116,65 | 107,43 | 125,18 | 107,73 | 107,42 | 118,49 | 83,79 | 138,45 | 138,45 | 120,73 | 120,73 | 163,13 | 120,6 |
| | | | | | | | | | | | | | | | | |
| TUN_trt | 174 | 154 | 190 | 152 | 155 | 102 | 152 | 170 | 210 | 180 | 180 | 180 | 150 | 150 | 50 | 156,6 |
| RDN_trt | 126,00 | 126,00 | 132,00 | 107,00 | 109,00 | 114,04 | 102,81 | 112,81 | 135,79 | 90,04 | 147,74 | 137,06 | 122,11 | 117,38 | 107,00 | 119,1 |
| RUN_trt | 0,8597 | 0,9138 | 0,9029 | 0,6633 | 0,6816 | 0,9197 | 0,6123 | 0,6971 | 0,9089 | 0,4316 | 1,1620 | 1,0002 | 0,8696 | 0,8036 | 1,1565 | 0,838 |
| TUN_TRT | 174 | 154 | 170 | 152 | 155 | 82 | 112 | 170 | 210 | 180 | 160 | 160 | 150 | 120 | 30 | 145 |
| RDN_TRT | 132,93 | 154,73 | 149,95 | 136,85 | 118,81 | 114,04 | 115,14 | 136,83 | 166,48 | 104,74 | 164,31 | 147,47 | 139,31 | 127,50 | 108,07 | 134,4 |
| RUN_TRT | 0,9568 | 1,3780 | 1,2318 | 1,0851 | 0,8099 | 1,0258 | 0,8948 | 1,0257 | 1,3661 | 0,5840 | 1,5246 | 1,2280 | 1,1318 | 1,0600 | 1,5231 | 1,12 |
| | | | | | | | | | | | | | | | | |
| (Figure_) | (2) | (3) | | (4) | | | | | | | | | | | | (1) |
| eTRT_RUN | 1,11 | 1,51 | 1,36 | 1,64 | 1,19 | 1,12 | 1,46 | 1,47 | 1,50 | 1,35 | 1,31 | 1,23 | 1,30 | 1,32 | 1,32 | 1,35 |
| CRP_trt | 132,01 | 128,01 | 137,47 | 125,57 | 118,57 | 119,26 | 118,93 | 121,31 | 137,21 | 101,08 | 148,45 | 148,45 | 128,11 | 128,11 | 122,22 | 127,6 |
| CRP_TRT | 132,01 | 128,01 | 133,62 | 125,57 | 118,57 | 112,82 | 109,94 | 121,31 | 137,21 | 101,08 | 144,02 | 144,02 | 128,11 | 121,11 | 107,82 | 124,3 |
| pTEC | 1,06 | 1,23 | 1,17 | 1,28 | 1,09 | 1,06 | 1,21 | 1,21 | 1,23 | 1,16 | 1,15 | 1,11 | 1,14 | 1,15 | 1,14 | 1,16 |
| pTEC_trt | 0,9545 | 0,9843 | 0,9602 | 0,8521 | 0,9193 | 0,9562 | 0,8644 | 0,9299 | 0,9896 | 0,8908 | 0,9952 | 0,9233 | 0,9531 | 0,9162 | 0,8755 | 0,931 |
| pTEC_TRT | 1,01 | 1,21 | 1,12 | 1,09 | 1,00 | 1,01 | 1,05 | 1,13 | 1,21 | 1,04 | 1,14 | 1,02 | 1,09 | 1,05 | 1,00 | 1,08 |
| eTEC_RDN | 90,47% | 80,16% | 82,26% | 66,62% | 84,34% | 90,62% | 71,67% | 76,66% | 80,72% | 76,57% | 86,96% | 83,40% | 83,54% | 79,80% | 76,11% | 80,66 |
| eTEC_RCN | 9,53% | 19,84% | 17,74% | 33,38% | 15,66% | 9,38% | 28,33% | 23,34% | 19,28% | 23,43% | 13,04% | 16,60% | 16,46% | 20,20% | 23,89% | 19,34 |

(suite)

| (Figure_) | (2) | (3) | | (4) | | | | | | | | | | | | (1) |
|---|---|---|---|---|---|---|---|---|---|---|---|---|---|---|---|---|
| UN_RDN_TR | 6,93 | 28,73 | 17,95 | 29,85 | 9,81 | 0,00 | 12,34 | 24,03 | 30,69 | 14,70 | 16,58 | 10,40 | 17,20 | 10,12 | 1,07 | 15,36 |
| UN_RCN_TR | 0,73 | 7,11 | 3,87 | 14,96 | 1,82 | 0,00 | 4,88 | 7,32 | 7,33 | 4,50 | 2,49 | 2,07 | 3,39 | 2,56 | 0,34 | 4,22 |
| pTEC_1 | 0,1273 | 0,9156 | 0,7243 | 0,3221 | 0,0228 | 0,1882 | 0,2236 | 0,6008 | 0,9437 | 0,2216 | 0,9622 | 0,2196 | 0,6202 | 0,3541 | 0,0161 | 43% |
| carnac | 0,09 | 6,51 | 2,80 | 4,82 | 0,04 | 0,00 | 1,09 | 4,39 | 6,92 | 1,00 | 2,39 | 0,45 | 2,10 | 0,91 | 0,01 | 2,24 |

17

[Table 5]

```
carnac <- function (dbase_id, LAT, LON, a1, b1, Na1, TUN_trt, RDN_trt, TUN_TRT, RDN_TRT)

{

options("sp_evolution_status"=2)
options(java.parameters = c("-XX:+UseConcMarkSweepGC", "-Xmx8192m"))
library(dplyr)
library(shapefiles)
library(stringr)
library(terra)
library(raster)
library(sf)
library(xlsx)

# calculate RUN for both trt and TRT ...

run_trt          <- RDN_trt/TUN_trt
drun             <- 1400*TUN_trt^-1.5
RUN_trt          <- run_trt^2/drun

run_TRT          <- RDN_TRT/TUN_TRT
dRUN             <- 1400*TUN_TRT^-1.5
RUN_TRT          <- run_TRT^2/dRUN

# relative efficacy of CP modificaiton in terms of RUN ...

eTRT_RUN         <- RUN_TRT/RUN_trt

# begin carnac calculations according to FR2307458 equations ...

CRP_trt          <- a1*TUN_trt^b1
CRP_TRT          <- a1*TUN_TRT^b1

pTEC_trt         <- RDN_trt/CRP_trt
pTEC_TRT         <- RDN_TRT/CRP_TRT
pTEC             <- pTEC_TRT/pTEC_trt              # ... for pTEC_1 and dSON_pTEC_Roth_C

eTEC_RDN         <- (pTEC_TRT^1)/eTRT_RUN          # ... pTEC_TRT/eAgroNum_RUN::carnac!
eTEC_RCN         <- 1 - eTEC_RDN                   # ... here is where the magic begins
eTEC_RPR         <- 0                              # ... de facto = 0.00 given AgroNum!

UN_RDN_TRT       <- RDN_TRT - RDN_trt              # ... simple agronomics, [TRT - trt]
UN_RCN_TRT       <- eTEC_RCN * UN_RDN_TRT          # ... all suppl. N not in RDN in RCN
UN_RPR_TRT       <- eTEC_RPR * UN_RCN_TRT          # ... de facto = 0.00 given AgroNum!
UN_TOT_TRT       <- UN_RDN_TRT + UN_RCN_TRT        # ... UN_RPR_TRT=0.00 given AgroNum!

# set pTEC at sustainable baseline 1 => pTEC_1

pTEC1 <- (pTEC_TRT-1) / (pTEC-1)

# calculate carnac (crédits azote remboursables _ refundable nitrogen credits)

carnac <- UN_RCN_TRT * pTEC1

# write carnac output to file ...

print(c(pTEC_trt, pTEC_TRT, UN_RCN_TRT, pTEC1, carnac))
output <- cbind( dbase_id, LAT, LON, a1, b1, Na1,
                 TUN_trt, RDN_trt, TUN_TRT, RDN_TRT,
                 pTEC_trt, pTEC_TRT, UN_RCN_TRT, pTEC1, carnac)
return(write.table(output, file="./output/carnac.txt", sep="\t", row.names=F, col.names=F, append=F))

} #END of carnac function
```

**Revendications**

1. **Méthode interopérable de fertilisation raisonnée en agriculture durable consistant en une interaction entre un opérateur et un utilisateur, l'opérateur transmettant à l'utilisateur des préconisations suite à l'évaluation du progrès technique attribuable à une modification de la pratique culturale par un traitement à l'essais sur la parcelle** comportant elle-même une méthode générique et interopérable de fertilisation raisonnée pour l'agriculture durable au nveau de la parcelle par voie d'évaluation d'une série de *rendements azotés,* RDN (kg-N$_{grain}$/hectare), correspondant à divers *taux de fertilisations azotées,* TUN (kg-N$_{fertilisant}$/hectare), et *rendements unitaires,* RUN (kg-N$_{grain}$/kg-N$_{fertilisant}$), propices à la *conservation de la matière organique du sol* et applicable à des parcelles agricoles de grandes cultures non-*Fabaceae* telles que les cultures céréalières d'hivers et de printemps, le colza, le tournesol et le maïs-grain, et comprenant la récolte de l'ensemble de la parcelle sans établissement de bandes-essais, et le calcul de ces couples [RDN ↔ TUN ], à l'aide du besoin unitaire de la pratique culturale, a_AgroNum (a$_{AgroNum}$) caractéristique de pratiques culturales durables et dérivé de RUN = run$^2$/d$_{RUN}$ de la sorte ;

$$a_{AgroNum} = \frac{1}{\sqrt{RUN \cdot d_{RUN}}}$$

de manière à ce que, connaissant RDN, l'objectif de rendement azoté durable souhaité puisse donc être rétro-calculé le taux de fertilisation azotée, TUN, qui lui corresponds ;

$$TUN = RDN \; x \; a_{AgroNum}$$

ou alternativement, en rétro-calculant l'objectif de rendement azoté, RDN, connaissant le taux de fertilisation azoté, TUN, que l'on souhait valorisé ;

$$RDN = TUN \; / \; a_{AgroNum}$$

> ainsi que ;

l'évaluation de la durabilité de la pratique culturale en œuvre lors de l'élaboration du rendement en grain, RDT, et/ou selon les intentions, habitudes et souhaits de l'agriculteur/rice ;

• un protocole de pilotage de la fertilisation azotée pour la dispense, le fractionnement, l'application au champ et/ou l'éventuel pilotage intra-saisonnier de ces différentes fractions de doses prévisionnelles d'engrais azoté, TUN, consistant en plusieurs fractions d'apports successifs d'azote y compris avantageusement l'ajustement du dernier apport en prenant en compte les observations sur l'état de la culture à l'aide d'outils de pilotage permettant d'évaluer l'état de la nutrition azotée de la culture.
• une actualisation dynamique au fil du temps de l'objectif de rendement selon la météorologie et/ou les cumuls thermiques et hydriques constatés et caractéristiques du lieu où est située la parcelle agricole consistant en une méthode reconnue de prédiction dynamique en cours de saison, intra-annuellement, des rendements, avantageusement azotés, RDN, de grandes-cultures non-*Fabaceae,* comportant le plus souvent une analyse bayésienne de la probabilité de réalisation dudit objectif de rendement azoté en cours d'élaboration sur le lieu d'une parcelle agricole en particulier ou encore,
• une approche d'agriculture de précision comportant une modulation intra-parcellaire des doses d'intrants à la production appliquées, notamment des susdites doses-prévisionnelles de fertilisation azotée, TUN, consistant en une modulation intra-parcellaire des taux d'applications desdits intrants - matières fertilisantes, pesticides, etc., de manière à apporter aux différentes zones de productivités inhérentes différentes à l'intérieure d'une même parcelle la dose prévisionnelle, TUN, qui lui est prescrite,

**caractérisée en ce que** ces couples [RDN ↔ TUN] durables sont rapportées sur une seule et unique courbe de réponse des RDN à TUN, *générique* et applicable à l'ensemble des susdites grandes cultures implantées sur la parcelle agricole, peu importe le type et la nature des intrants composant l'itinéraire de la pratique culturale sur cette parcelle, de manières à ce que ces TUN correspondant à ces RDN fassent maintenant office de doses prévisionnelles, et vice et versa, que ces RDN correspondant à ces TUN, d'objectifs de rendements durables,

➢ sachant que,

la susdite *évaluation de* la *durabilité* d'une quelconque pratique culturale consiste en une méthode d'évaluation et de parangonnage de la durabilité de pratiques culturales en agronomie au niveau de la parcelle agricole comprenant la récolte de l'ensemble de la parcelle sans bandes-essais, à savoir ;

• la détermination d'une *référence pédoclimatique,* rTSQ, pour la parcelle,
• la détermination de la *performance agronomique* de l'intrant, TSQ, pour la parcelle,
• la mise en relation de TSQ par rapport à rTSQ donnant eTSQ = [TSQ/rTSQ - 11,

et de même pour ce qui concerne $eASQ = \lceil ASQ/rASQ - 1 \rceil$ et $eQSQ = \lceil QSQ/rQSQ - 1 \rceil$, de manière à comptabiliser complétement l'effet eTRT non seulement de l'intrant à titre de traitement (T) à l'essai sur le rendement observé mais aussi celui du choix de l'objectif de rendement quinquennal moyen (Q) tel qu'affecté par la météorologie de l'année en cour (A),

➢ et que,

l'intrant en question n'en n'est pas un et l'évaluation de l'efficacité relative (e) d'un tel pseudo-traitement - un galop d'essai (dry run), ne modifie donc pas l'actuelle pratique culturale de la parcelle et peut donc être posée comme nulle, i.e. eTRT ≡ 0, sachant que formellement $eTRT = \lceil eTSQ - eQSQ - eASQ \rceil$ et donc maintenant $eTSQ = \lceil eQSQ + eASQ \rceil$ lorsque que eQSQ = QSQ/rQSQ et eASQ = ASQ/rASQ puisque que QSQ est l'objectif de rendement conventionnel pour la parcelle par rapport à un certain indice de productivité en biomasse de la parcelle, iSQ, ASQ le potentiel de rendement local ou régional affecté par la météo cette année là - rQSQ et rASQ, les deux références pédoclimatiques propres à QSQ et ASQ, et plus particulièrement, ici, **en ce que** ;

• la durabilité de l'itinéraire technique est assurée lorsque TSQ ≈ rTSQ,
• si le différentiel TSQ - rTSQ est positif l'itinéraire technique est *trop intensif* et l'objectif de rendement doit être réduit, ou dans le cas contraire,
• si ce différentiel TSQ est négatif l'itinéraire technique est *trop extensif* et ce même objectif de rendement doit, ou du moins peut être augmenté,

sachant que le degré de durabilité de l'itinéraire technique est proportionnel à la distance verticale [y:x] suivant l'ordonnée (y) séparant cette valeur de TSQ = rendement/iSQ de la droite [y:x] = [1:1] décrivant une correspondance parfaite entre TSQ et rTSQ,

➢ et de plus,
TSQ et rTSQ sont exprimés en termes de rendement unitaire (RUN ; kg-N$_{grain}$/kg-N$_{fertili-sant}$) de sorte que (r)RUN = (r)TSQ$_{RUN}$ x iSQ, RUN étant ici égale à run$^2$/d$_{RUN}$ sachant que run est le rendement unitaire *simple* avant correction en fonction de d$_{RUN}$ = [*a* · TUN$^{-b}$], les coefficients *a* et *b* provenant de relations empiriques décrivant la décroissance de run avec l'augmentation de TUN exprimé en équivalents kg-N$_{fertilisant}$/hectare,
> mais maintenant aussi **caractérisée en ce que**,

**suite à ladite interaction entre opérateur et utilisateur, l'opérateur transmet à l'utilisateur des préconisations provenant de l'évaluation du progrès technique attribuable à une modification de la pratique culturale par un traitement à l'essais sur la parcelle** comportant les déterminations suivantes ;

o l'efficacité du traitement TRT est déterminé par rapport au témoin non-traité trt en termes de rendement unitaire de l'azote RUN (kg-Ng/kg-Nf) ajusté par iSQ & d RUN comme proposé ci-haut **[Équation 041** ;

$$eTRT_{RUN} = \left[\frac{RUN_{TRT}}{RUN_{trt}}\right]_{RSQ}$$

o y compris par rapport à la courbe de réponse CRP à l'azote fertilisant-N de rendements azotés RDN et des doses prévisionnelles d'engrais azotés TUN (kg-N fertilisant/ha) correspondantes [Équation 05] ;

$$pTEC = \left[\frac{RDN_{TRT}}{RDN_{trt}}\right]_{CRP_N}$$

o lorsque pTEC TRT & pTEC trt proviennent de l'ajustement par rapport à CRP selon TUN TRT & TUN trt fonction en puissance d'al & b1 décrivant ces courbes de réponses **[Équations 06 & 07]** ;

$$pTEC_{TRT} = [RDN_{TRT}]_{CRP_N} \mid > 1 \, ; CRP_{N_{TRT}} = a1 \; x \; TUN_{TRT}^{b1}$$

$$pTEC_{trt} = [RDN_{trt}]_{CRP_N} \mid \leq 1 \, ; CRP_{N_{trt}} = a1 \; x \; TUN_{trt}^{b1}$$

les coefficients *a1* et *b1* des fonctions en puissance des courbes de réponse CRP des rendements azotés RDN selon les taux de fertilisation azotée TUN, et implicites dans $\boldsymbol{pTEC_{TRT}} = [\boldsymbol{RDN_{TRT}}]_{\boldsymbol{CRPN}} \mid > \boldsymbol{1}$ ; $; \boldsymbol{CRP_{N_{TRT}}} = \boldsymbol{a1} \; \boldsymbol{x} \; \boldsymbol{TUN_{TRT}^{b1}}$ pour ce qui est des traitements TRT par rapport à la courbe de réponse CRP spécifique à la parcelle, et pareillement $\boldsymbol{pTEC_{trt}} = [\boldsymbol{RDN_{trt}}]_{\boldsymbol{CRPN}} \mid \leq \boldsymbol{1}$ ; $\boldsymbol{CRP_{N_{trt}}} = \boldsymbol{a1} \; \boldsymbol{x} \; \boldsymbol{TUN_{trt}^{b1}}$ pour ce qui est des pratiques culturales non-modifiées à titre de témoin trt non-traités par rapport à cette même courbe CRP, étant obtenus par régression non-linéaires des RDN durables par régression non-linéaire de ces RDN durables et leurs taux de fertilisation TUN correspondants ;
o tout cela en posant eTRT_RUN > 1 puisqu'il ne sert évidemment à rien d'évaluer la durabilité de traitements TRT incapables d'augmenter RDN lorsque eTRT_RUN ≤ 1 **[Équation 08]** ;

$$pTEC = \left[\frac{pTEC_{TRT}}{pTEC_{trt}}\right] \mid > 1$$

o de manière à déterminer le nombre d'unité d'azote supplémentaires ainsi mobilisées par le grain récolté et attribuable à cette efficacité de TRT, UN_RDN_TRT (kg-Ng/ha) **[Équation 09]** ;

$$UN_{RD \; TRT} = RDN_{TRT} - RDN_{trt}$$

o augmentant du coup les retours au sol d'azote UN RCN TRT (kg-N résidus/ha) attribuables au traitement TRT à l'essai sur la parcelle, par exemple une fertilisation azotobactérienne AZB **[Équation 10]** ;

$$UN_{RCN_{TRT}} = [1 - eTEC_{RDN}] \; x \; UN_{RDN_{TRT}} \mid eTEC_{RDN} = \left[\frac{pTEC_{TRT}}{eTRT_{RUN}}\right]$$

o en posant une seconde condition de durabilité, à savoir que la pratique culturale témoin trt donne un rendement azoté en dessous ou tout au plus sur la courbe de réponse à l'azote CRP [**Équation 11**] ;

$$pTEC_{trt} \leq 1$$

o en tenant compte des unités d'azote additionnelles mobilisés vers les résidus de culture attribuable eTRT et d'obtenir ainsi le nombre total d'unité d'azote UN TOT TRT

$$UN_{TO \; TRT} = UN_{RDN_{TRT}} + UN_{RCN_{TRT}}$$

o et connaître du nombre unités d'azote retournées au sol attribuables au traitement TRT, UN_RCN_TRT, la portion de ce supplément d'azote contribuant expressément à pTEC_TRT étant **[Équation 13]** ;

$$pTEC_1 = \left[\frac{1 - pTEC_{TRT}}{1 - pTEC}\right]$$

o et le nombre d'unités d'azote supplémentaires attribuables au traitement TRT modifiant la pratique culturale mais laissés aux résidus de culture post-récolte pour assurer leur humification selon **[Équation 14]** ;

$$\text{crédits azote remboursables (carnac)} = UN_{RCN_{TRT}} \, x \, pTEC_1$$

o sachant que ce nombre précis d'unités d'azote attribuables au traitement TRT à titre de progrès technique durable pTEC TRT d'une pratique culturale est défendable si et seulement si **[Équation 15]** ;

$$\text{Progrès technique durable} \mid eTRT > pTEC > pTEC_{TRT}$$

c'est-à-dire si et seulement si l'efficacité eTRT est supérieure à l'efficacité durable du progrès technique pTEC, et celle-ci supérieure à pTEC_TRT strictement attribuable au traitement TRT modifiant la pratique culturale, et cela lorsque le progrès technique attribuable à la pratique culturale témoin non-modifiée, trt, est ≤ 1 par rapport à la courbe de réponse à l'azote fertilisant CRP.

2. **Méthode interopérable de fertilisation raisonnée en agriculture durable** selon la première revendications **caractérisée en ce que** les coefficients empiriques *a* et *b* se situent entre 1200 ↔ 1500 et 1,40 ↔ 1,60, respectivement, mais plus avantageusement **en ce que *a*** est égale à 1400 et *b* à 1,50.

3. **Méthode interopérable de fertilisation raisonnée en agriculture durable** selon une quelconque des revendications précédentes **caractérisée en ce que** les unités d'azote supplémentaires attribuables au traitement TRT laissés aux résidus de culture au sol pour assurer leur humification en matière organique sont valorisables à hauteurs du prix courant de l'unité d'azote (1 kg-N_fertilisant/ha) sur les marchés, ou encore selon tout mécanisme de compensation reconnu en comptabilité environnementale.

4. **Méthode interopérable de fertilisation raisonnée en agriculture durable** selon une quelconque des précédentes revendications **caractérisée en ce que** le progrès technique pTEC véritablement durable attribuable au traitement TRT à l'essai sur la parcelle est ré-évalué à travers le temps par rapport à une courbe de réponse CRP à l'azote fertilisant des rendements azotés durables au sens entendu en constante évolution du fait d'une intelligence collective réalisée numériquement par intelligence artificielle intégrant progressivement ce type de pTEC durablement réalisé.

5. **Méthode interopérable de fertilisation raisonnée en agriculture durable** selon une quelconque des revendications 1, 4 & 5 **caractérisée en ce que** TSQ et rTSQ, lorsque eTRT ≡ 0, i.e. en absence de modifications de la pratique culturale lors d'un galop d'essai sans nouveaux intrants à l'essai sur la parcelle, font ici référence aux rendements observés - ou actuels, RSQ, et rendements de références durables, rRSQ, respectivement, ces derniers, rRSQ, faisant office de parangons (*benchmark,* angl.) de durabilité.

6. **Méthode interopérable de fertilisation raisonnée en agriculture durable** selon une quelconque des revendications précédentes **caractérisée en ce que** par durable il est convenu que les $RSQ_{RUN}$ trop élevés ou trop faibles par rapport à la valeur $rRSQ_{RUN}$ durable correspondant sont systématiquement exclus du jeu de données prédictif.

7. **Méthode interopérable de fertilisation raisonnée en agriculture durable** selon une quelconque des deux revendications précédentes **caractérisée en ce que** RSQ & rRSQ sont jugés suffisamment similaires lorsque la différence entre RSQ et rRSQ exprimée en termes de RUN, i.e. $RSQ_{RUN}$ & $rRSQ_{RUN}$, est de +/- 5 à 15%, plus précisément +/- 8 à 12% et avantageusement environ +/- 10% de celle de rRSQ, lorsque que ces RSQ & rRSQ exprimés en termes de RUN (kg-$N_{grain}$/kg-$N_{fertilisant}$), c'est-à-dire le rendement azoté, RDN, par kg-$N_{fertilisant}$ (TUN; kg-$N_{fertilisant}$/ha) calculé comme le rapport RUN = run²/$d_{RUN}$ sachant que, encore une fois, run est le rendement unitaire et $d_{RUN}$ = [*a* · TUN$^{-b}$], *a* et *b* étant des coefficients empiriques décrivant la diminution progressive de l'exécution avec l'augmentation de TUN applicable à l'ensemble des susdites grandes cultures.

8. **Méthode interopérable de fertilisation raisonnée en agriculture durable** selon une quelconque des revendications précédentes **caractérisée en ce que** les références pédoclimatiques rTSQ, rRSQ, rQSQ et rASQ sont déterminées à l'aide d'une méthode prédictive dite d'intelligence artificielle comprenant un vaste ensemble de variables agropédoclimatiques (Var_APC).

9. **Méthode interopérable de fertilisation raisonnée en agriculture durable** selon une quelconque des revendications précédentes **caractérisée en ce que** la courbe de réponse à l'azote comprenant les différents taux de fertilisation azotée et leurs objectifs de rendements azotée, RDN, durables correspondants est interopérable avec les susdites technologies de fertilisation raisonnée en agriculture durable via une quelconque technologies de communications, à savoir des réseaux cellulaires, wifi, des cartes mémoires, *clouds* (sic, angl.), clefs USB insérables, ou encore plus par téléphone ou facsimilée, ou même par simple activations manuelle, vocale ou écrite s'il le fallait

**Patentansprüche**

1. **Interoperable Methode der nachhaltigen Düngung in nachhaltiger Landwirtschaft,** die aus einer Interaktion zwischen einem Bediener und einem Nutzer besteht, wobei der Bediener dem Nutzer Empfehlungen übermittelt, nachdem er den technischen Fortschritt bewertet hat, der sich aus einer Änderung der Anbaupraxis durch eine Versuchsbehandlung auf der Parzelle ergibt, die wiederum eine generische und interoperable Methode der systematischen Düngung für eine nachhaltige Landwirtschaft auf der Ebene der Parzelle umfasst, bei der eine Reihe von *Stickstofferträgen,* RDN (kg-$N_{Korn}$/Hektar) bewertet werden, die verschiedenen *Stickstoffdüngungsraten,* TUN (kg-$N_{Dünger}$/Hektar), und *Einheitserträgen,* RUN (kg-$N_{Korn}$/kg-$N_{Dünger}$), entsprechen, die für die *Erhaltung der organischen Bodensubstanz* förderlich sind und auf landwirtschaftliche Parzellen mit Non-Fabaceae-Kulturen wie Winter- und Sommergetreide, Raps, Sonnenblumen und Körnermais anwendbar sind und die Ernte der gesamten Parzelle ohne Einrichtung von Teststreifen sowie die Berechnung dieser Paare [ RDN ↔ TUN ] umfasst, mithilfe des Einheitsbedarfs der Anbaupraxis, a_AgroNum ($a_{AgroNum}$), der charakteristisch für nachhaltige Anbaupraktiken ist und sich von RUN = run²/$d_{RUN}$ ableitet, nach der Formel;

$$a_{AgroNum} = \frac{1}{\sqrt{RUN \cdot d_{RUN}}}$$

sodass, bei Kenntnis von RDN, dem erwünschten Ziel für einen nachhaltigen Stickstoffertrag, daraus die entsprechende Stickstoffdüngungsrate TUN zurückgerechnet werden kann;

$$TUN = RDN \; x \; a_{AgroNum}$$

oder alternativ durch Rückrechnung des angestrebten Stickstoffertrags, RDN, in Kenntnis der Stickstoffdüngermenge, TUN, die man verwerten möchte;

$$RDN \; = \; TUN \; / \; aAgroNum$$

➢ sowie;

Die Bewertung der Nachhaltigkeit der angewandten Anbaupraxis bei der Ermittlung des Kornertrags, RDT, und/oder gemäß den Absichten, Gewohnheiten und Wünschen des Landwirts/der Landwirtin;

• ein Protokoll zur Steuerung der Stickstoffdüngung für die Ausbringung, die Aufteilung, die Anwendung auf dem Feld und/oder die eventuelle innersaisonale Steuerung dieser verschiedenen Teilgaben von vorgesehenen Stickstoffdüngerdosen, TUN, bestehend aus mehreren Fraktionen von aufeinanderfolgenden Stickstoffgaben einschließlich vorteilhafterweise der Anpassung der letzten Gabe unter Berücksichtigung der Beobachtungen über den Zustand der Kultur mithilfe von Steuerungsinstrumenten, die es ermöglichen, den Zustand der Stickstoffernährung der Kultur zu bewerten.
• eine dynamische Aktualisierung des Ertragsziels im Zeitverlauf, entsprechend der Meteorologie und/oder den festgestellten und für den Ort, an dem sich die landwirtschaftliche Parzelle befindet, charakteristischen Wärme- und Wasserkumulationen, bestehend aus einer anerkannten Methode zur dynamischen Vorhersage der Erträge im Verlauf der Saison, vorteilhafterweise der Stickstofferträge, RDN, von Ackerkulturen, die nicht zu den *Fabaceae* gehören, die am häufigsten eine Bayes'sche Analyse der Wahrscheinlichkeit des Erreichens des genannten Ziels für den Stickstoffertrag umfasst, der auf einer bestimmten landwirtschaftlichen Parzelle entsteht, oder auch,... ein Ansatz der Präzisionslandwirtschaft, der eine parzelleninterne Modulation der angewandten Dosen von Produktionsmitteln umfasst, insbesondere der oben genannten vorgesehenen Dosen der Stickstoffdüngung, TUN, bestehend aus einer parzelleninternen Modulation der Anwendungsraten der genannten Produktionsmittel - Düngemittel, Pestizide, usw. -, um den verschiedenen Zonen unterschiedlicher inhärenter Produktivität innerhalb derselben Parzelle die vorgesehene Dosis, TUN, zuzuführen, die ihr jeweils vorgeschrieben wird,

**dadurch gekennzeichnet, dass** diese nachhaltigen [RDN ↔ TUN]-Paare auf eine einzige und eindeutige, *generische* RDN-zu-TUN-Reaktionskurve bezogen werden, die für alle oben genannten landwirtschaftlichen Kulturen auf der landwirtschaftlichen Parzelle anwendbar ist, unabhängig von der Art und dem Wesen des Inputs, der den Ablauf der Anbaupraxis auf dieser Parzelle bildet, so dass diese TUN, die diesen RDN entsprechen, nun als vorgesehene Dosen fungieren und umgekehrt diese RDN, die diesen TUN entsprechen, als nachhaltige Ertragsziele fungieren,

➢ wobei gilt, dass,

die oben genannte *Bewertung der Nachhaltigkeit* einer beliebigen Anbaupraxis aus einer Methode zur Bewertung und zum Vergleich der Nachhaltigkeit von Anbaupraktiken in der Agrarwissenschaft auf der Ebene der landwirtschaftlichen Parzelle besteht, die die Ernte der gesamten Parzelle ohne Teststreifen umfasst, nämlich;

• die Bestimmung einer *bodenklimatischen Referenz,* rTSQ, für die Parzelle,
• die Bestimmung der *agronomischen Leistung* des Inputs, TSQ, für die Parzelle,
• die Verknüpfung von TSQ zu rTSQ ergibt eTSQ = [TSQ/rTSQ - 1],

und auch ebenso eASQ = [ASQ/rASQ - 1] und eQSQ = [QSQ/rQSQ - 1], um den Effekt eTRT nicht nur des Behandlungsinputs (T) im Versuch auf den beobachteten Ertrag, sondern auch den Effekt der Wahl des durchschnittlichen fünfjährigen Ertragsziels (Q), so wie es durch das Wetter des laufenden Jahres (A) beeinflusst wird, vollständig zu verbuchen,

➢ und dass,

der betreffende Input keiner ist und die Bewertung der relativen Wirksamkeit (e) einer solchen Pseudo-Behandlung - eines Probelaufs (dry run) - daher die aktuelle Anbaupraxis auf dem Feld nicht verändert und daher als Null angenommen werden kann, d. h. eTRT ≡ 0, wobei formal eTRT = [eTSQ - eQSQ - eASQ] und damit nun eTSQ = [eQSQ + eASQ], wenn eQSQ = QSQ/rQSQ und eASQ = ASQ/rASQ, da QSQ das konventionelle Ertragsziel für die Parzelle im Vergleich zu einem bestimmten Biomasseproduktivitätsindex der Parzelle ist, iSQ, ASQ das lokale oder regionale Ertragspotenzial, das durch das in diesem Jahr stattfindende Wetter beeinflusst wird - rQSQ und rASQ die beiden für QSQ und ASQ spezifischen Bodenklimareferenzen, und noch spezieller, hier, dadurch, dass ;

• die Nachhaltigkeit des technischen Ablaufs gewährleistet ist, wenn TSQ ≈ rTSQ,
• wenn die Differenz TSQ - rTSQ positiv ist, ist der technische Ablauf *zu intensiv* und das Ertragsziel muss reduziert werden, oder im umgekehrten Fall,
• wenn diese TSQ-Differenz negativ ist, ist der technische Ablauf *zu exfensiv* und ebendieses Ertragsziel muss oder zumindest kann erhöht werden,

wobei der Grad der Nachhaltigkeit des technischen Ablaufs proportional zum vertikalen Abstand [y:x] ist, der der Ordinate (y) folgt, die diesen Wert von TSQ = Ertrag/iSQ von der Geraden [y:x] = [1:1] trennt, und eine perfekte Übereinstimmung zwischen TSQ und rTSQ beschreibt,

➢ und weiter,
TSQ und rTSQ als Ertrag pro Einheit ausgedrückt werden (RUN; kg-$N_{Korn}$/kg-$N_{Dünger}$) so dass (r)RUN = (r) $TSQ_{RUN}$ x iSQ ist, wobei RUN hier gleich $run^2/d_{RUN}$ ist, wobei run der *einfache* Einheitsertrag vor der Korrektur als Funktion von $d_{RUN} = [a \cdot TUN^{-b}]$ ist, wobei die Koeffizienten *a* und *b* aus empirischen Relationen stammen, die die Abnahme von run mit zunehmendem TUN beschreiben, ausgedrückt in Äquivalenten kg-$N_{Dünger}$/Hektar,
➢ aber jetzt zusätzlich **dadurch gekennzeichnet, dass**,

im Anschluss an die besagte Interaktion zwischen Bediener und Nutzer der Bediener dem Nutzer Empfehlungen übermittelt, gemäß der Bewertung des technischen Fortschritts, der einer Änderung der Anbaupraxis zuzurechnen ist, durch eine Versuchsbehandlung auf der Parzelle, die die folgenden Bestimmungen umfasst;

• Die Wirksamkeit der TRT-Behandlung wird bestimmt im Vergleich zur unbehandelten Kontrolle trt, mit Blick auf den Stickstoff-Einheitsertrag RUN (kg-Nk/kg-Nd), angepasst durch iSQ & d_RUN, wie oben vorgeschlagen **[Gleichung 04]**;

$$eTRT_{RUN} = \left[\frac{RUN_{TRT}}{RUN_{trt}}\right]_{RSQ}$$

• und einschließlich im Vergleich zur CRP-Reaktionskurve auf Stickstoffdünger-N von Stickstoff-Erträgen RDN und entsprechenden prognostizierten Stickstoffdüngerdosen TUN (kg- N_Dünger/ha) [**Gleichung 05** ];

$$pTEC = \left[\frac{RDN_{TRT}}{RDN_{trt}}\right]_{CR\ N}$$

• wenn pTEC_TRT & pTEC_trt aus der Anpassung im Vergleich zu CRP gemäß TUN_TRT & TUN_trt Potenzfunktion von a1 & b1 stammen, die diese Reaktionskurven beschreiben **[Gleichungen 06 und 07]**;

$$pTEC_{TRT} = [RDN_{TRT}]_{CRP_N} | > 1 \, ; CRP_{N_{TRT}} = a1 \, x \, TUN_{TRT}^{b1}$$

$$pTEC_{trt} = [RDN_{trt}]_{CRP_N} | \leq 1 \, ; CRP_{N_{trt}} = a1 \, x \, TUN_{trt}^{b1}$$

die Koeffizienten *a1* und *b1* der Potenzfunktionen der CRP-Reaktionskurven der Stickstofferträge RDN in Abhängigkeit von den Stickstoffdüngerraten TUN, und implizit in **$pTEC_{TRT}$ = $[RDN_{TRT}]_{CRP_N}$ | > 1** ; **$CRP_{N_{TRT}} = a1 \, x \, TUN_{TRT}^{b1}$** = hinsichtlich der Behandlungen TRT im Vergleich zur CRP-Reaktionskurve spezifisch für die Parzelle, und ebenso **$pTEC_{trt}$ = $[RDN_{trt}]_{CRP_N}$ | ≤ 1** ; **$CRP_{N_{trt}} = a1 \, x \, TUN_{trt}^{b1}$** hinsichtlich unveränderter Anbaumethoden als unbehandelter trt-Kontrolle im Vergleich zu derselben CRP-Kurve, die durch nichtlineare Regression der nachhaltigen RDN durch nichtlineare Regression dieser nachhaltigen RDN und ihrer entsprechenden Düngungsraten TUN erhalten werden ;

○ all dies unter der Annahme von eTRT_RUN > 1, da es offensichtlich nichts bringt, die Nachhaltigkeit von TRT-Behandlungen zu evaluieren, die nicht in der Lage sind, RDN zu erhöhen, wenn eTRT_RUN ≤ 1 **[Gleichung 08]**;

$$pTEC = \left[\frac{pTEC_{TRT}}{pTEC_{trt}}\right] | > 1$$

○ um die Anzahl der zusätzlichen Stickstoffeinheiten zu bestimmen, die durch das geerntete Korn mobilisiert wurden und dieser Effizienz von TRT zuzurechnen sind, UN_RDN_TRT (kg-Ng/ha) **[Gleichung 09** ];

$$UN_{RDN_{TRT}} = RDN_{TRT} - RDN_{trt}$$

○ was den Stickstoffrückfluss in den Boden UN_RCN_TRT (kg-N_Rückstände/ha) stark erhöht, der auf die TRT-Versuchsbehandlung auf der Parzelle zurückzuführen ist, wie z. B. eine Azotobakterien-Düngung AZB **[Gleichung 10]**;

$$UN_{RCN_{TRT}} = [1 - eTEC_{RDN}] \; x \; UN_{RDN_{TRT}} \mid eTEC_{RDN} = \left[\frac{pTEC_{TRT}}{eTRT_{RUN}}\right]$$

o durch das Aufstellen einer zweiten Nachhaltigkeitsbedingung, nämlich dass die Kontrollanbaumethode trt einen Stickstoffertrag unterhalb oder höchstens auf der Stickstoffreaktionskurve CRP liefert **[Gleichung 11 ]**;

$$pTEC_{trt} \leq 1$$

∘ unter Berücksichtigung der zusätzlichen Stickstoffeinheiten, die aus den zurechenbaren Pflanzenrückständen mobilisiert werden eTRT und erhält so die Gesamtzahl der Stickstoffeinheiten UN_TOT_TRT **[Gleichung 12]**;

$$UN_{TOT_{TRT}} = UN_{RDN_{TRT}} + \; UN_{RCN_{TRT}}$$

∘ und man kennt die Anzahl der Stickstoffeinheiten, die in den Boden zurückgeführt werden und der TRT-Behandlung zuzurechnen sind, UN_RCN_TRT, der Anteil dieses zusätzlichen Stickstoffs, der ausdrücklich zu pTEC_TRT beiträgt, ist **[Gleichung 13]**;

$$pTEC_1 = \left[\frac{1 - pTEC_{TRT}}{1 - pTEC}\right]$$

o und die Anzahl der zusätzlichen Stickstoffeinheiten, die der TRT-Behandlung zuzurechnen sind, die die Anbaupraxis geändert hat, aber den Nacherntekulturrückständen zur Humifizierung belassen werden, gemäß **[Gleichung 14]** zu gewährleisten;

$$Zusätzlicher\ rückführbarer\ Stickstoff\ (carnac) = UN_{RCN_{TRT}} \; x \; pTEC_1$$

o wobei diese genaue Anzahl von Stickstoffeinheiten, die der TRT-Behandlung als nachhaltiger technischer Fortschritt pTEC_TRT einer Anbaupraxis zuzuordnen ist, nur dann verteidigt werden kann, wenn **[Gleichung 15 ]**;

$$Nachhaltiger\ technischer\ Fortschritt \mid eTRT > \; pTEC > \; pTEC_{TRT}$$

das bedeutet, wenn und nur wenn die Effizienz eTRT größer ist als die nachhaltige Effizienz des technischen Fortschritts pTEC und diese wiederum größer als pTEC_TRT, die strikt zu der TRT-Behandlung zugeordnet werden kann, die die Anbaupraxis verändert, und zwar dann, wenn der technische Fortschritt, der der unveränderten Kontroll-Anbaupraxis, trt, zurechenbar ist, ≤ 1 im Vergleich zur Reaktionskurve auf Stickstoffdünger CRP beträgt.

2. **Interoperable Methode zur nachhaltigen Düngung in der nachhaltigen Landwirtschaft,** nach dem ersten Anspruch, **dadurch gekennzeichnet, dass** die empirischen Koeffizienten *a* und *b* zwischen 1200 ↔ 1500 bzw. 1,40 ↔ 1,60 liegen, vorteilhafter jedoch dadurch, dass *a* gleich 1400 und *b* gleich 1,50 ist.

3. **Interoperable Methode zur nachhaltigen Düngung in der nachhaltigen Landwirtschaft,** nach einem der vorhergehenden Ansprüche, **dadurch gekennzeichnet, dass** die zusätzlichen Stickstoffeinheiten, die der TRT-Behandlung zuzurechnen sind, die den Kulturrückständen im Boden gelassen wird, um ihre Humifizierung zu organischer Substanz zu gewährleisten, in Höhe des aktuellen Preises für eine Stickstoffeinheit (1 kg-N_Dünger/ha) auf den Märkten oder auch nach jedem in der Umweltbuchhaltung anerkannten Kompensationsmechanismus verwertet werden können.

4. **Interoperable Methode zur nachhaltigen Düngung in der nachhaltigen Landwirtschaft** nach einem der vorhergehenden Ansprüche, **dadurch gekennzeichnet, dass** der wirklich nachhaltige technische Fortschritt pTEC, der der TRT-Behandlung im Feldversuch zuzurechnen ist, im Laufe der Zeit in Bezug auf eine CRP-Reaktionskurve auf Stickstoff reevaluiert wird, der nachhaltige Stickstofferträge im verstandenen Sinne düngt, die sich ständig weiterentwickeln, aufgrund einer kollektiven Intelligenz, die digital durch künstliche Intelligenz realisiert wird, die schrittweise diese Art von nachhaltig realisiertem pTEC integriert.

5. **Interoperable Methode zur nachhaltigen Düngung für nachhaltige Landwirtschaft,** nach einem der Ansprüche 1, 4 & 5, **dadurch gekennzeichnet, dass** TSQ und rTSQ, wenn eTRT $\equiv$ 0, d. h. ohne Änderungen der Anbaupraxis während eines Probelaufs ohne neue Inputs, die auf der Parzelle getestet werden, hier bezogen sind auf die beobachteten - oder aktuellen - Erträge, RSQ, beziehungsweise auf die nachhaltigen Referenzerträge, rRSQ, wobei die letzteren, rRSQ, als Vergleichswert (*Benchmark*) für die Nachhaltigkeit fungieren.

6. **Interoperable Methode zur nachhaltigen Düngung für nachhaltige Landwirtschaft,** nach einem der vorhergehenden Ansprüche, **dadurch gekennzeichnet, dass** für Nachhaltigkeit festgelegt ist, dass die $RSQ_{RUN}$, die zu hoch oder zu niedrig im Vergleich zum entsprechenden nachhaltigen $rRSQ_{RUN}$-Wert sind, systematisch aus dem Vorhersagedatensatz ausgeschlossen werden.

7. **Interoperable Methode zur nachhaltigen Düngung für nachhaltige Landwirtschaft,** nach einem der beiden vorhergehenden Ansprüche, **dadurch gekennzeichnet, dass** RSQ & rRSQ als ausreichend ähnlich angesehen werden, wenn die Differenz zwischen RSQ und rRSQ, ausgedrückt als RUN, d. h. $RSQ_{RUN}$ & $rRSQ_{RUN}$ beträgt +/- 5 bis 15%, genauer gesagt +/- 8 bis 12% und vorteilhafterweise etwa +/- 10% von rRSQ, wenn diese RSQ & rRSQ ausgedrückt als RUN (kg-$N_{Korn}$/kg-$N_{Dünger}$), das bedeutet, dass der Stickstoffertrag, RDN, pro kg-$N_{Dünger}$ (TUN;kg-$N_{Dünger}$/ha), berechnet als das Verhältnis RUN =$run^2/d_{RUN}$, wobei wiederum run der Einheitsertrag und $d_{RUN}$ = $[a \cdot TUN^{-b}]$ ist, wobei *a* und *b* empirische Koeffizienten sind, die die allmähliche Abnahme der Ausführung mit zunehmendem TUN beschreiben, der auf alle oben genannten Feldfrüchte anwendbar ist.

8. **Interoperable Methode zur nachhaltigen Düngung für nachhaltige Landwirtschaft,** nach einem der vorhergehenden Ansprüche, **dadurch gekennzeichnet, dass** die pedoklimatischen Referenzen rTSQ, rRSQ, rQSQ und rASQ mithilfe einer prädiktiven Methode bestimmt werden, einer sogenannten künstlichen Intelligenz, die einen umfangreichen Datensatz von agropedoklimatischen Variablen (Var_APC) umfasst.

9. **Interoperable Methode zur nachhaltigen Düngung für nachhaltige Landwirtschaft,** nach einem der vorhergehenden Ansprüche, **dadurch gekennzeichnet, dass** die Reaktionskurve auf Stickstoff, die die verschiedenen Raten der Stickstoff-Düngung und ihre entsprechenden nachhaltigen Stickstoff-Ertrags ziele, RDN, umfasst, mit den oben genannten Technologien zur systematischen Düngung in der nachhaltigen Landwirtschaft über eine beliebige Kommunikationstechnologie interoperabel ist, d. h. über Mobilfunknetze, WiFi, Speicherkarten, *Clouds* (sic, engl.).), ansteckbare USB-Sticks, oder mehr noch über Telefon oder Faksimile, oder sogar durch einfache manuelle, sprachliche oder schriftliche Aktivierungen, wenn es sein muss.

## Claims

1. **Interoperable method of integrated fertilizer management in sustainable agriculture consisting of an interaction between an operator and a user, the operator transmitting to the user recommendations following the evaluation of the technical progress attributable to a modification of the cultivation practice by a trial treatment on the plot** itself comprising a generic and interoperable method of integrated fertilizer management for sustainable agriculture at the level of the plot by means of evaluation of a series of *nitrogen yields,* RDN (kg-$N_{grain}$/hectare), corresponding to various *nitrogen fertilization rates,* TUN (kg-$N_{fertilizer}$/hectare), and *unit yields,* RUN (kg-$N_{grain}$/kg-$N_{fertilizer}$) suitable for the *conservation of soil organic matter* and applicable to agricultural plots of non-Fabaceae field crops such as winter and spring cereal crops, rapeseed, sunflower and grain maize, and comprising the harvesting of the whole plot without the establishment of test strips, and the calculation of these pairs [ RDN $\leftrightarrow$ TUN ], with the help of the unitary need of the cultivation practice, a_AgroNum ($a_{AgroNum}$) characteristic of sustainable cultivation practices and derived from RUN = $run^2/d_{RUN}$ in this way;

$$a_{AgroNum} = \frac{1}{\sqrt{RUN \cdot d_{RUN}}}$$

so that, knowing RDN, the desired sustainable nitrogen yield objective can therefore be reverse-calculated the corresponding nitrogen fertilization rate, TUN;

$$TUN = RDN \; x \; a_{AgroNum}$$

or alternatively, by reversing the nitrogen yield objective, RDN, knowing the nitrogen fertilization rate, TUN, which we want to be valued;

$$RDN = TUN \; / \; a_{AgroNum}$$

➢ as well as;

the evaluation of the sustainability of the cultivation practice implemented during the development of the grain yield, RDT, and/or according to the intentions, habits and wishes of the farmer;

• a <u>nitrogen fertilization management protocol</u> for the dispensing, fractionation, field application and/or possible intra-seasonal management of these different fractions of forecast nitrogen fertilizer doses, TUN, consisting of several fractions of successive nitrogen inputs, including advantageously the adjustment of the last application by taking into account observations on the state of the crop using management tools to assess the state of the crop. nitrogenous nutrition of the crop.

• a <u>dynamic update</u> over time of the yield objective according to the meteorology and/or the thermal and water accumulations observed and characteristic of the place where the agricultural plot is located, consisting of a recognised method of dynamic prediction during the season, intra-annually, of the yields, advantageously nitrogen, RDN, of non-Fabaceae field crops, most often including a Bayesian analysis of the probability of achieving that nitrogen yield objective being developed on the site of a particular agricultural parcel or,

• a <u>precision agriculture</u> approach comprising an intra-plot modulation of the doses of inputs to production applied, in particular the above-mentioned forecast doses of nitrogen fertilization, TUN, consisting of an intra-plot modulation of the application rates of the said inputs - fertilizing materials, pesticides, etc., so as to bring the different zones of inherent productivity within the same plot the dose forecast, TUN, which is prescribed to him,

**characterized in that** these sustainable pairs [RDN ↔ TUN] are reported on a single curve of the response of RDN to TUN, generic and applicable to all the abovementioned field crops planted on the agricultural plot, regardless of the type and nature of the inputs making up the itinerary of the cultivation practice on that plot, so that these NURs corresponding to these RDNs now serve as forecast doses, and vice versa, and these RDNs corresponding to these TUNs, as sustainable yield targets,

➢ bearing in mind that,

The aforementioned *evaluation of the sustainability* of any cultivation practice consists of a method of evaluating and paragoning the sustainability of agricultural practices in agronomy at the level of the agricultural plot including the harvesting of the entire plot without test strips, namely;

• the determination of *a pedoclimatic reference,* rTSQ, for the plot,
• the determination of the *agronomic performance* of the input, TSQ, for the plot,
• the relationship of TSQ with respect to rTSQ giving eTSQ = [TSQ/rTSQ - 1],

and likewise for eASQ = [ASQ/rASQ - 1] and eQSQ = [QSQ/rQSQ - 1], so as to fully account for the eTRT effect not only of the input as a test treatment (T) on the observed yield but also of the choice of the average five-year yield objective (Q) as affected by the weather of the current year (A),

➢ and that,

the input in question is not an input and the evaluation of the relative effectiveness (e) of such a pseudo-treatment - a dry run, does not modify the current cultivation practice of the plot and can therefore be set as zero, i.e. eTRT ≡ 0, knowing that formally eTRT = [eTSQ - eQSQ - eASQ] and therefore now eTSQ = [eQSQ + eASQ] when eQSQ = QSQ/rQSQ and eASQ = ASQ/rASQ since QSQ is the conventional yield objective for the plot in relation to a certain biomass productivity index of the plot, iSQ, ASQ the local or regional yield potential affected by the weather that year - rQSQ and rASQ, the two pedoclimatic references specific to QSQ and ASQ, and more particularly, here, **in that**;

• the sustainability of the technical route is ensured when TSQ ≈ rTSQ,
• if the TSQ - rTSQ differential is positive, the technical route is *too **intensive*** and the performance objective must be reduced, or if not,
• if this TSQ differential is negative, the technical itinerary is *too **extensive*** and this same performance objective must, or at least can be increased,

knowing that the degree of durability of the technical route is proportional to the vertical distance [y:x] following the ordinate (y) separating this value of TSQ = efficiency/iSQ from the line [y:x] = [1:1] describing a perfect correspondence between TSQ and rTSQ,

➢ and furthermore,

TSQ and rTSQ are expressed in terms of unit yield (RUN; kg-N$_{grain}$/kg-N$_{fertilizer}$) so that (r)RUN = (r)TSQRUN x iSQ, RUN being here equal to run$^2$/d$_{RUN}$ knowing that run is the simple unit yield before correction according to d$_{RUN}$ = [*a* · TUN-b], the coefficients *a* and *b* from empirical relationships describing the decrease of run with the increase in TUN expressed in kg-N fertilizer equivalents/hectare,

➢ but now also **characterized in that**,

**Following the said interaction between operator and user, the operator shall transmit to the user recommendations resulting from the evaluation of the technical progress attributable to a change in the cultivation practice by a trial treatment on the plot** including the following determinations;

o the efficiency of the TRT treatment is determined relative to the untreated trt control in terms of the unit yield of RUN nitrogen (kg-Ng/kg-Nf) adjusted by iSQ & d_RUN as proposed above **[Equation 04 ]**;

$$eTRT_{RUN} = \left[\frac{RUN_{TRT}}{RUN_{trt}}\right]_{RSQ}$$

o including in relation to the CRP response curve to N-fertilizing nitrogen of RDN nitrogen yields and the corresponding forecast rates of TUN nitrogen fertilizers (kg-N_fertilisant/ha) **[Equation 05]** ;

$$pTEC = \left[\frac{RDN_{TRT}}{RDN_{trt}}\right]_{CRP_N}$$

o when pTEC_TRT & pTEC _trt arise from the fit with respect to CRP according to TUN_TRT & TUN _trt power function of a1 & b1 describing these response curves **[Equations 06 & 07 ]**;

$$pTEC_{TRT} = [RDN_{TRT}]_{CRP_N} \,|> 1 \,; CRP_{N_{TRT}} = a1 \: x \: TUN_{TRT}^{b1}$$

$$pTEC_{trt} = [RDN_{trt}]_{CRP_N} \,|\leq 1 \,; CRP_{N_{trt}} = a1 \: x \: TUN_{trt}^{b1}$$

the coefficients *a1* and *b1* of the potential functions of the CRP response curves of the RDN nitrogen yields according to the TUN nitrogen fertilization rates, and implicit in the case of TRT treatments in relation to the plot-specific CRP response curve, and similarly in the case of unmodified cultivation practices as a trt control not treated in relation to the same CRP curve, being obtained by nonlinear regression of sustainable RDNs and their corresponding TUN fertilization rates;

$$pTEC_{TRT} = \: [RDN_{TRT}]_{CRP_N} \,|> 1 \,; CRP_{N_{TRT}} = a1 \: x \: TUN_{TRT}^{b1}$$

$$pTEC_{trt} = \: [RDN_{trt}]_{CR \: N} \,|\leq 1 \,; CRP_{N_{trt}} = a1 \: x \: TUN_{trt}^{b1}$$

o all this by setting eTRT_RUN > 1 since there is obviously no point in evaluating the durability of TRT treatments unable to increase RDN when eTRT_RUN $\leq$ 1 **[Equation 08]**;

$$pTEC = \left[\frac{pTEC_{TRT}}{pTEC_{trt}}\right] \mid > 1$$

o to determine the number of additional units of nitrogen thus mobilized by the harvested grain and attributable to this TRT efficiency, UN_RDN_TRT (kg-Ng/ha) **[Equation 09]** ;

$$UN_{RDN_{TRT}} = RDN_{TRT} - RDN_{trt}$$

o thereby increasing UN_RCN_TRT nitrogen returns to the soil (kg-N_résidus/ha) due to the TRT treatment being tested on the plot, such as AZB azotobacterial fertilization **[Equation 10]**;

$$UN_{RCN_{TRT}} = [1 - eTEC_{RDN}] \: x \: UN_{RDN_{TRT}} \mid eTEC_{RDN} = \left[\frac{pTEC_{TRT}}{eTRT_{RUN}}\right]$$

o by setting a second condition of sustainability, namely that the trt control cultivation practice gives a nitrogen yield below or at most on the CRP nitrogen response curve **[Equation 11** ];

$$pTEC_{trt} \leq 1$$

o taking into account the additional units of nitrogen mobilized to the crop residues attributable to eTRT and thus obtain the total number of units of nitrogen UN_TOT_TRT **[Equation 12]**;

$$UN_{TOT_{TRT}} = UN_{RD \:\: TRT} + UN_{RCN_{TRT}}$$

o and the number of units of nitrogen returned to the soil attributable to the TRT treatment, UN_RCN_TRT, the portion of that additional nitrogen specifically contributing to pTEC_TRT being **[Equation 13]** ;

$$pTEC_1 = \left[\frac{1 - pTEC_{TRT}}{1 - pTEC}\right]$$

∘ and the number of additional nitrogen units attributable to TRT treatment modifying the cultivation practice but left for post-harvest crop residues to ensure their humification according to **[Equation 14]** ;

$$refundable \: nitrogen \: credits \: (carnac) = UN_{RCN_{TRT}} \: x \: pTEC_1$$

o Knowing that this precise number of units of nitrogen attributable to TRT treatment as a sustainable technical progress pTEC_TRT a cultural practice is defensible if and only if **[Equation 15]** ;

$$sustainable \: technological \: progress \mid eTRT > pTEC > pTEC_{TRT}$$

i.e. if and only if the eTRT efficiency is greater than the sustainable efficiency of the technical progress pTEC, and the latter greater than pTEC_TRT strictly attributable to the TRT treatment modifying the cultivation practice, and this when the technical progress attributable to the unmodified control cultivation practice, TRT, is $\leq$ 1 with respect to the response curve to the fertilizing nitrogen CRP.

2. **Interoperable method of integrated fertilizer management in sustainable agriculture** according to the first claim **characterized in that** the empirical coefficients *a* and *b* are between 1200 ↔ 1500 and 1.40 ↔ 1.60, respectively, but more advantageously **in that *a*** is equal to 1400 and *b* is equal to 1.50.

3. **Interoperable method of integrated fertilizer management in sustainable agriculture** according to any of the preceding claims, **characterized in that** the additional units of nitrogen attributable to the TRT treatment left to the crop residues on the soil to ensure their humification into organic matter can be recovered at the level of the current price of the unit of nitrogen (1 kg-N_fertilisant/ha) on the markets, or any compensation mechanism recognized in environmental accounting.

4. **Interoperable method of integrated fertilizer management in sustainable agriculture** according to any of the preceding claims, **characterized in that** the truly sustainable pTEC technical progress attributable to the TRT treatment being tested on the plot is re-evaluated over time in relation to a CRP response curve to nitrogen fertilizing sustainable nitrogen yields in the sense understood to be constantly evolving due to a collective intelligence carried out numerically by artificial intelligence gradually integrating this type of sustainably realized pTEC.

5. **Interoperable method of integrated fertilizer management in sustainable agriculture** according to any of claims 1, 4 & 5 **characterized in that** TSQ and rTSQ, when eTRT $\equiv$ 0, i.e. in the absence of changes in the cultivation practice during a trial run without new inputs being tested on the plot, refer here to the observed - or current - yields, RSQ, and sustainable benchmark yields, rRSQ, respectively, with the latter, rRSQ, acting as benchmarks of sustainability.

6. **An interoperable method of integrated fertilizer management in sustainable agriculture** according to any of the above claims, **characterized in that** by sustainable it is agreed that RSQRUNS that are too high or too low in relation to the corresponding $rRSQ_{RUN}$ sustainable value are systematically excluded from the predictive dataset.

7. **Interoperable method of integrated fertilizer management in sustainable agriculture** according to any of the two preceding claims, **characterized in that** RSQ & rRSQ are considered sufficiently similar when the difference between RSQ and rRSQ expressed in terms of RUN, i.e. $RSQ_{RUN}$ & $rRSQ_{RUN}$, is +/- 5 to 15%, more precisely +/- 8 to 12% and advantageously about +/- 10% of that of rRSQ, when these RSQ & rRSQ expressed in terms of RUN (kg-$N_{grain}$/kg-$N_{fertilizer}$), i.e. the nitrogen yield, RDN, per kg-$N_{fertilizer}$ (TUN; kg-$N_{fertilizer}$/ha) calculated as the ratio RUN = $run^2/d_{RUN}$ whereas, again, run is the unit yield and $d_{RUN}$ = [$a \cdot$ TUN-b], $a$ and $b$ being empirical coefficients describing the gradual decrease in execution with the increase in TUN applicable to all the above-mentioned field crops.

8. **An interoperable method of integrated fertilizer management in sustainable agriculture** according to any of the preceding claims, **characterized in that** the pedoclimatic references rTSQ, rRSQ, rQSQ and rASQ are determined using a predictive method called artificial intelligence comprising a large set of agropedoclimatic variables (Var_APC).

9. **Interoperable method of integrated fertilizer management in sustainable agriculture** according to any of the preceding claims **characterized in that** the nitrogen response curve comprising the different nitrogen fertilization rates and their corresponding sustainable nitrogen yield objectives, RDN, is interoperable with the aforesaid sustainable fertilization technologies in sustainable agriculture via any communication technologies, namely cellular networks, wifi, memory cards, *clouds* (sic, Engl.), insertable USB keys, or even more by phone or facsimile, or even by simple manual, voice or written activations if necessary

[Fig 1]

[Fig 2]

[Fig 3]

eTRT_RUN 154%
pTEC_RDN 126%
pTEC_TRT 118%

UN_RCN_TRT 15.46
pTEC_1 70%
carnac (UN) 10.80

latitude 49.76
longitude 2.99

$y = 42.35x^{0.2256}$

RDN (kg-N_grain/ha) vs TUN (kg-N_fertilizer/ha)

[Fig 4]

eTRT_RUN 242%
pTEC_RDN 156%
pTEC_TRT 118%

UN_RCN_TRT 54.77
pTEC_1 33%
carnac (UN) 18.04

latitude 59.83
longitude 17.71

$y = 38.187x^{0.2561}$

RDN (kg-N_grain/ha) vs TUN (kg-N_fertilizer/ha)

[Fig 5]

a)

pc odifiée

« additionnalité »

« atteignement »

pc non-modifiée

AgroNum™ fait la part entre les modifications des pratiques cultures, pc, ne faisant qu'atteindre la durabilité, et celles allant au-delà et contribuant ainsi à la conservation, voire l'accumulation de la matière organique du sol. L'*additionnalité* de ces modifications est ainsi assurée.

RDN (kg-N_grain/ha)

TUN (kg-N_fertilizer/ha)

b)

RDN (kg-Ngrain/ha)

TUN (kg-Nfertilizer/ha)

c)

[Fig 6]

EUNEP 2015

L'*équilibre RDN ↔ TUN* favorable à la conservation de la matière organique du sol est bien connue, mais inapplicable en conseil agricole parcellaire.

EP4101280
EP3821688

En réponse, des *références agropédoclimatiques RSQ* constitués de tels rendements unitaires RUN ($N_{grain}/N_{engrais}$) intermédiaires sont générés par IA.

EP4252516

Le rendement azoté RDN récolté est ainsi redéfini comme objectif de rendement durable plus proche de la *courbe de réponse CRP* à l'engrais-N TUN.

FR2307458

L'utilisateur d'AgroNum peut aussi transmette un RDN témoin qui permettra le calcul de *crédits azote remboursables* par rapport à la courbe CRP.

[Fig 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 4252516 A
- EP 22210746
- EP 4101280 A
- FR 2307458
- EP 3821688 A
- EP 3335536 A
- EP 4252512 A

### Littérature non-brevet citée dans la description

- **BERTA** ; **ROUX**. The endless expansion of carbon offsetting: sequestration by agricultural soils in historical perspective. *Cambridge Journal of Economics*, 2024, vol. 1, 20, https://doi.org/10.1093/cje/beae008
- **BETTIGOLE et al.** Optimizing Sampling Strategies for Near-Surface Soil Carbon Inventory. *One Size Doesn't Fit All. Soil Syst.*, 2023, vol. 7, 27, https://doi.org/10.3390/ soilsystems7010027
- **BRUNDTLAND et al.** Our common future : Report of the World Commission on Environment and Development. *United Nations*, 1987, https://sustainable-development.un.org/content/documents/5987our-common-future.pdf
- **CLAUDE** ; **FILLION**. Effet de l'apport d'un inoculum bactérien aux résidus de culture de maïs-grain au sol sur le rendement et la qualité de blés d'hiver panifiables en France. *Agrosol*, 2004, vol. 15 (1), 23-29, https://edn-cms.f-static.net/uploads/2922902/normal_5e8b1235c3bd4.pdf
- Nitrogen Use Efficiency (NUE) an indicator for the utilization of nitrogen in food systems. *EUNEP 2015 (EU Nitrogen Expert Panel)*, http://www.eunep.com/
- **GHALI et al.** L'agriculture écologiquement intensive. Une approche économique. *Économie rurale*, 2014, vol. 341, http://journals.openedition.org/economierurale/4338
- **GRIFFON et al.** Qu'est-ce que l'agriculture écologiquement intensive ?. *Éditions Quæ RD*, 2013, vol. 10, 78026
- **HOGLUND et al.** Removing Carbon Now : How can companies and individuals fund negative emissions technologies in a safe and effective way to help solve the climate crisis?. *Oxfam discussion papers*, 2020
- **LADHA et al.** Global nitrogen budgets in cereals - A 50-year assessment for maize, rice, and wheat production systems. *SCIE NT IF IC RepoRts*, 2016, vol. 6, 19355
- **PRICE et al.** Biochar carbon markets: A mitigation deterrence threat. *Environmental Science and Policy*, 2024, vol. 154, 103704, https://doi.org/10.1016/j.envsci.2024.103704
- **RICHARDSON et al.** The inorganic nutrient cost of building soil carbon. *Carbon Management*, 2014, vol. 5 (3)
- **SOENEN et al.** Méthode Label Bas-Carbone Grandes Cultures. *Disponible sur le site du MTE*, 2021, 133, https://www.ecologie.gouv.fr/label-bas-carbone
- **VAN GROENIGEN et al.** Sequestering Soil Organic Carbon: A Nitrogen Dilemma. *Environ. Sci. Technol.*, 2017